# EUROPEAN PATENT SPECIFICATION

(11) **EP 1 171 856 B1**
(45) Date of publication and mention of the grant of the patent: **23.07.2003**
(21) Application number: 00911044.6
(22) Date of filing: 15.03.2000
(51) Int. Cl.: G08B 13/14, G06F 1/00, H04L 12/28

(54) **SECURITY SYSTEMS**
SICHERHEITEINRICHTUNGEN
SYSTEMES DE SECURITE

(30) Priority: 19.03.1999 EP 99302133
(43) Date of publication of application: 16.01.2002
(73) Proprietor: BRITISH TELECOMMUNICATIONS public limited company, London EC1A 7AJ (GB)
(72) Inventor: Reeder, Stephen Michael, Emerson Valley, Milton Keynes MK4 2DN (GB); Bradley, David William, Felixstowe, Suffolk IP11 2BP (GB)
(86) International application number: GB0000971
(87) International publication number: WO00057378

(56) References cited:
- EP-A- 0 574 230
- EP-A- 0 859 501
- WO-A-96/12264
- WO-A-98/04967
- WO-A-98/36391
- MARGOLIN B: "SMARTER STUFF" BYTE, vol. 22, no. 6, 1 June 1997 (1997-06-01), page 85, 87, 89, 91/92 XP000691560 ISSN: 0360-5280

## Description

The present invention relates to security systems and more particularly to security systems for protecting electrical or electronic apparatus.

In published European patent application number 675626 the Assignee of the present invention disclosed a security system for protecting electrical appliances, in which appliances fitted with a security module, preferably during manufacture, were responsive to the connection of mains electrical power to forward a signal by way of the mains electrical connection to a security unit. The security unit was connected to both the mains power supply and to a telephone line at the premises. On receipt of signalling from an appliance, the security unit established a telephone call to a remote operations centre which, based on the calling line identity (CLI) of the customer's line returned a security code. The returned security code was then transmitted by the domestic security unit to the requesting apparatus which, provided a correct code was received, allowed connection of electrical power through to operational circuits. If an incorrect code or no code was returned, power to operational circuits was denied.

In published PCT patent applicant number GB98/00337 (publication number W098 36391) the Assignee disclosed an improvement to the system the earlier invention, in which a volatile data store held codes for each of a number of appliances whereby only upon first connection of a new appliance or following a mains failure would it be necessary to generate a telephone call to the remote operations centre. Thus by providing a volatile data store for holing apparatus codes, application across the mains supply by a piece of apparatus requesting identity could be responded to locally.

Each of the above patent applications relies upon a modern telecommunications switching network in which CLI is available. However, certain networks, for example those which use GSM radio signal communication do not provide a location dependent identity.

For the avoidance of doubt, the term "security aware apparatus" as used herein means any energy consuming device including means responsive to an interruption of power to effect, on reconnection of power, a requirement for receipt of signals characterising a locational identity or an apparatus identity and including means responsive to receipt of signals characterising an incorrect code, or to the expiry of a period of time during which no such characterising signals are received, to effect temporary inoperability of the device until receipt of signals characterising a correct code.

According to the present invention there is provided a security system comprising a remote operations centre, at least one home control unit and at least one security aware apparatus associated with the or each home control unit, the remote operations centre including a data store which stores, in respect of the or each security aware apparatus, respective codes generated in response to a request for coding transmitted by security aware apparatus through the associated home control unit, the remote operations centre transmitting data to the home control unit on request to permit the home control unit to transmit the respective release code to requesting security aware apparatus, the home control unit communicating with the remote operations centre through a cellular radio system, the cellular radio system determining by triangulation the approximate location of the home control unit and transmitting data defining the location to the remote operations centre, the remote operations centre determining codes to be transmitted in dependence upon the determined location of the home control unit.

Preferably the home control unit includes a data store in which release codes for the or each of the associated security aware apparatus is stored, on first connection of a security aware apparatus to the system, the home control unit responding to signals requesting a code transmitted therefrom by communicating a respective identity code received from the transmitting apparatus data to the remote operations centre, the remote operations centre returning at least one respective code for retransmission to the requesting apparatus.

The data store may be volatile whereby on disconnection of mains electrical power from the home control unit all stored codes are lost, the home control unit, on re-connection of power, communicating with the remote operations centre for downloading of all data whereby if the home control unit is moved to a different location the remote operations centre downloads different release codes or downloads no codes.

The home control unit may transmit a unit identity code unique to the home control unit whereby home control units removed to an unauthorised location may be traced.

The home control unit may include means to receive signals from i security aware apparatus by data messages superimposed on a mains electrical power line, by low power radio communication which may use DECT (digital cordless telephony) protocols or by connectionless communication. Transmitting means for returning release codes to security aware apparatus may also use data messages superimposed on a mains electrical power line, by low power radio communication or by connectionless communication using internet or intranet facilities.

A security system in accordance with the invention will now be described by way of example only with reference to the accompanying drawings of which:
Figure 1 is a schematic representation of at least a part of the security system;
Figure 2 is a block schematic diagram of a typical security module of protected apparatus;
Figure 3 shows at least a part of one of the security units of Figure 1.
Figure 4 is a schematic representation of a data stored by protected apparatus.
Figures 5a to 5e show signalling interchange between the security control unit of Figure 1 and the appliance and a remote operations centre where a remote operations centre is provided;

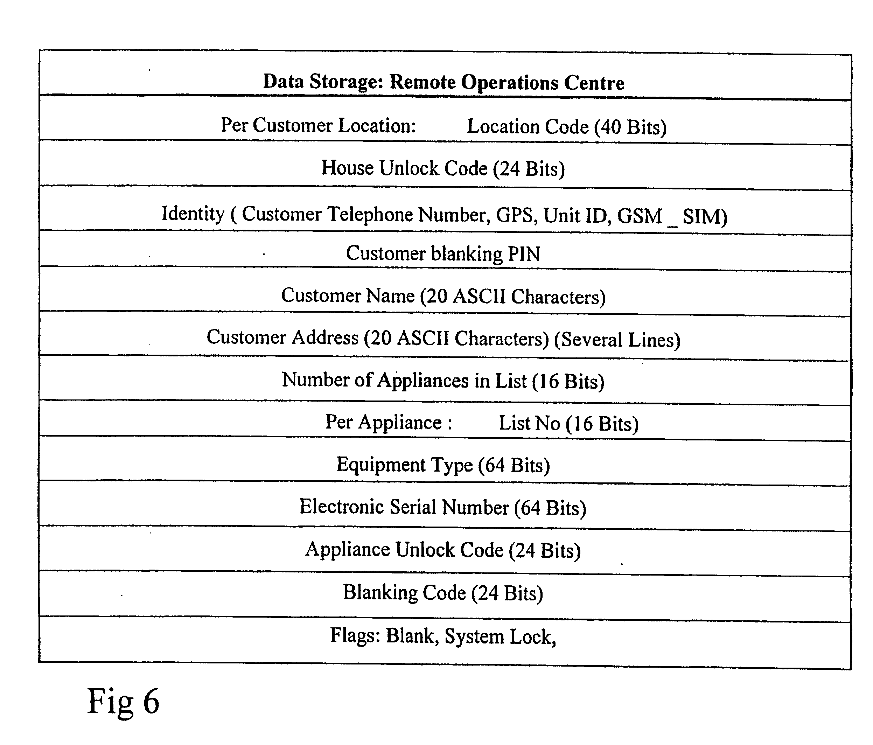

Figure 6 shows data which may be stored at a remote location or in a home control unit;

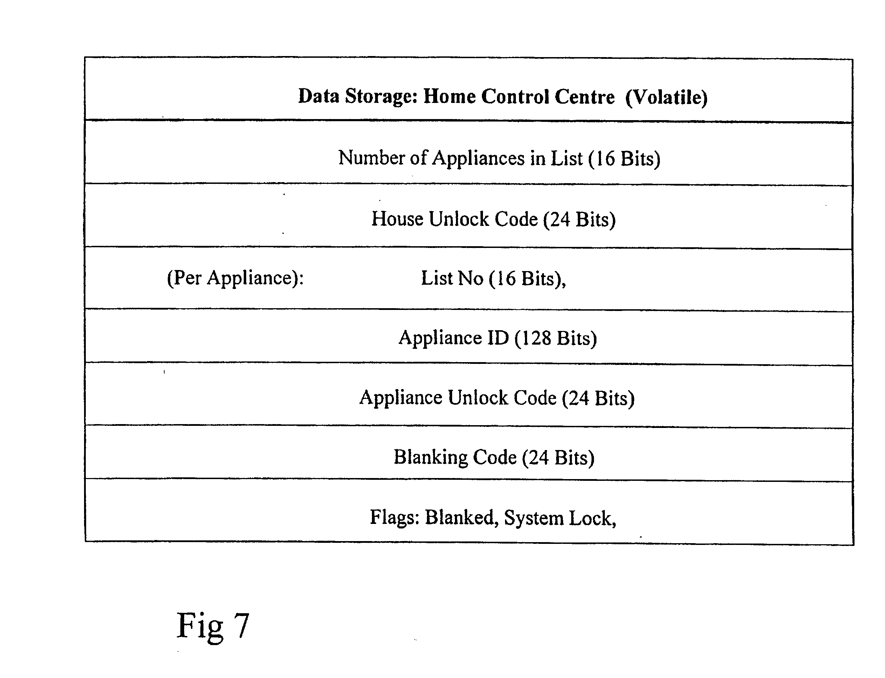

Figure 7 shows data which may be stored in a home control unit responsive to a remote operations centre;
Figures 8, 9 and 10 is a flow chart showing a process control of the protected apparatus of Figure 2;
Figures 11, 12 and 13 shows part of a flow chart for the processor of a home control unit of Figure 1 which is responsive to a remote operations centre;
Figures 14a and 14b show a flow chart of a remote operations centre (where provided);
Figure 15 is a schematic diagram showing a number of alternative ways of communicating between a home control unit and a remote operations centre;
Figure 16 is a block schematic diagram showing various methods of determining location of a home control unit;
Figure 17 is a schematic diagram of security aware apparatus having a DECT interface for communicating with a home control unit;
Figure 18 is a schematic diagram showing a part of a home control unit with a DECT interface for communicating with security aware apparatus of Figure 17;
Figure 19 is a schematic diagram showing a modification to include a TCP/IP interface for communication by internet or intranet;
Figure 20 shows an adapted home control unit for use with the apparatus of Figure 19;
Figure 21 is a block schematic diagram of secure premises having stand alone security unit;
Figure 22 to 25 are flow charts of the operation of a processor in the security unit of Figure 21;
Figures 26A to E are signalling charts showing signalling between the security unit of Figure 21 and a domestic appliance; and
Figure 27 is a schematic representation of a data store of the security unit of Figure 21.

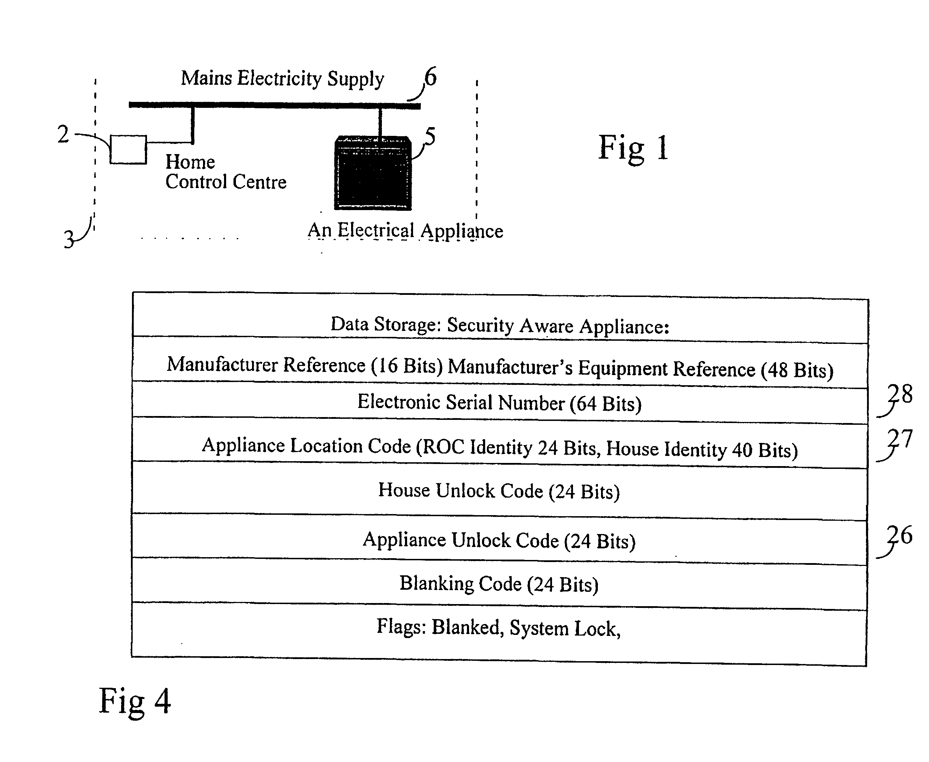

Referring first to Figure 1, the system, previously disclosed, included within domestic premises 1, the boundary of which is indicated by a dotted line 3, a home control unit 2 containing security features for the premises 1. Various versions of the home control unit 2 are described hereinafter, some of which may be "stand alone" applications but most of which will communicate with a remote security centre.

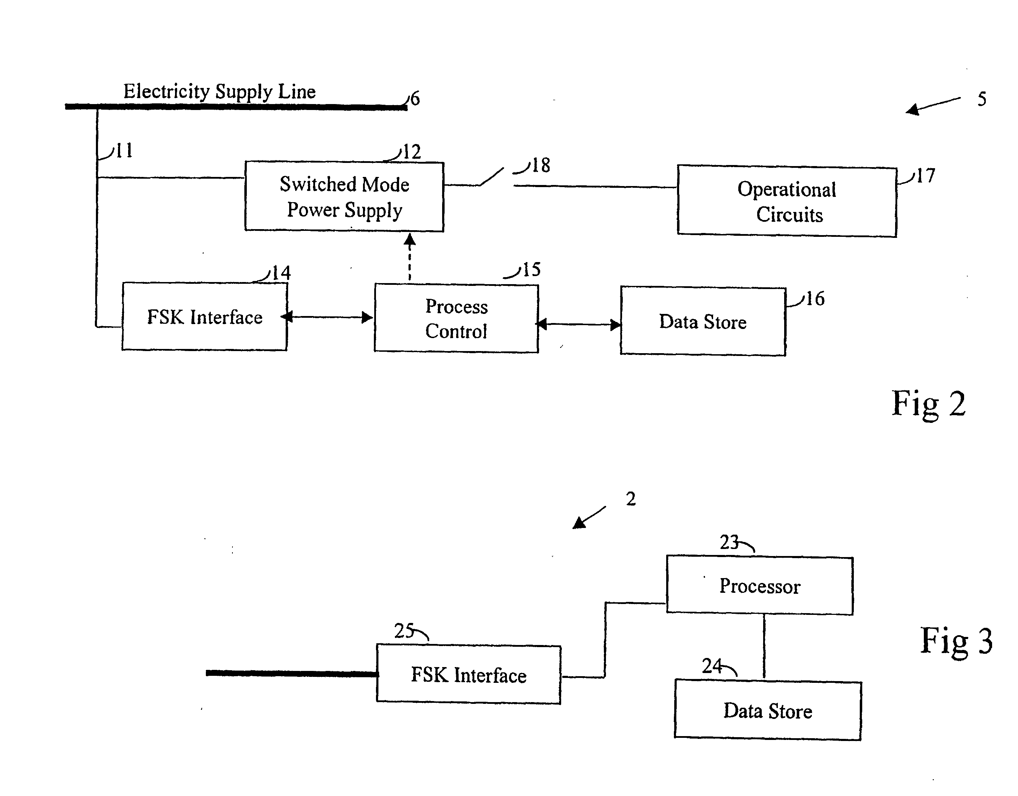

The home control unit 2 communicates with security aware electrical appliances, one of which is indicated at 5. Communication between the home control unit and electrical appliance 5 may be in a number of ways, again hereinafter described, but basically security aware electrical appliance 5 requires a dedicated release code to be transmitted to it each time mains electrical power from a supply line 6 is disconnected and reconnected. If a security aware electrical appliance does not receive its release code then a processor, preferably integrated with power supply or other circuitry, prohibits or disconnects electrical supply to operation circuits of the apparatus. Thus referring to Figure 2 the electrical appliance 5 is modified by incorporating a switch 18 between a power supply 12 of the apparatus and operational circuits 17. It will be appreciated that the switch 18 is shown purely for ease of description and it may be incorporated into the power supply 12. The apparatus also includes a process control 15, a data store 16 and, in the particular version shown here, a frequency shift key interface (FSK) 14 for communicating across the electrical supply line 6 with a home control unit.

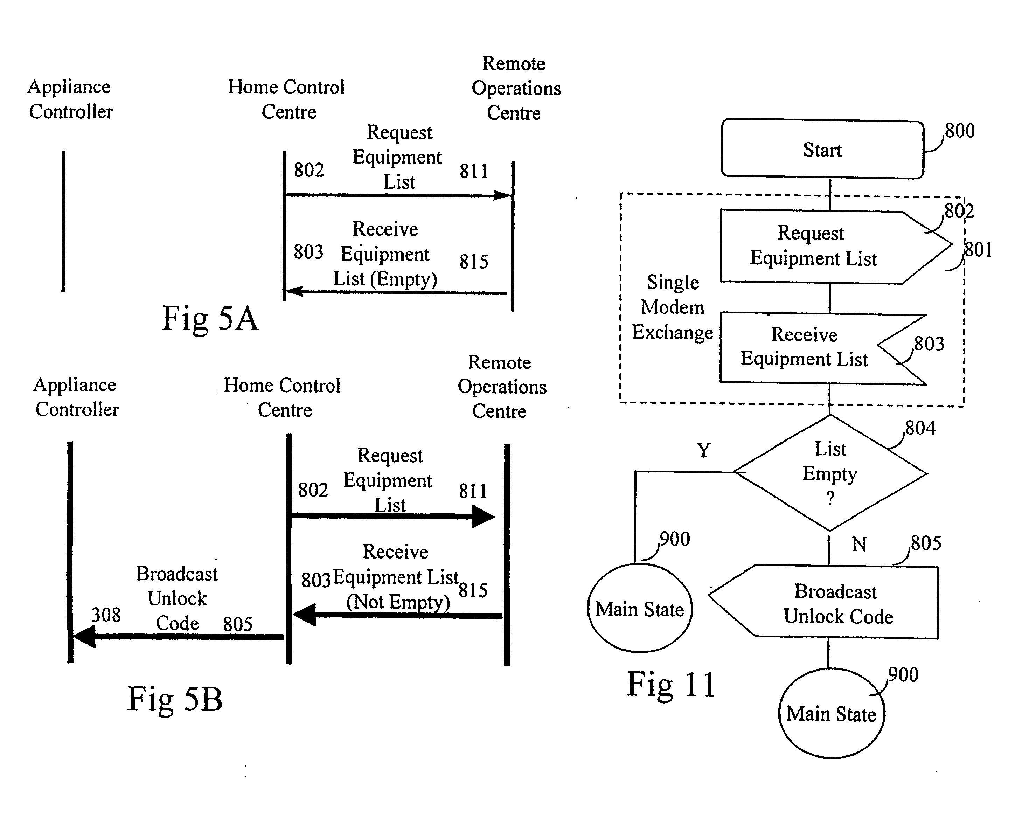

Figure 3 shows the essential components of the home control unit 2, these being a processor 23, data store 24 and a corresponding FSK communications interface 25 connected to the supply line 6. basically, as discussed in the aforementioned published patent application, on connection of an electricity supply by way of power input 11 to the apparatus 5, the process control unit 15 consults the associated data store 16 to determine whether the apparatus has previously been connected in a security aware environment. If it has been so previously connected then, referring additionally to Figure 4, an appliance unlock code 26 will be stored. the process control therefore causes signalling to be applied to the supply line 6 by way of the interface 14, which identifies, for example by use of a manufacturer reference, manufacturers equipment reference and electronic serial number, the specific piece of electrical apparatus which has been connected. The home control unit of figure 3 detects the presence of the signalling and via its own FSK interface 25 compares the received security code with information in its own data store 24 which may be, depending on the type of centre, a volatile store. Having compared the equipment serial number with its own data, the processor recovers from its data store the appropriate unlock code for the particular appliance and causes this code to be transmitted by way of the FSK interface 25 back to the electricity supply line 6 and thence through FSK interface 14 to the appliances own processor 15. Assuming that the codes are compatible the processor control 15 either now permits power to be connected to the operational circuits or, in an alternative mode of operation, does not effect power disconnection.

Various features of the security applied to electrical appliances in different ways and of different home control units will become apparent from the description hereinafter. However, which ever kind of communication between security aware apparatus and a home control unit and/or with a remote security centre is used the common feature is that apparatus removed from its authorised location will cease to function. Provision is made, as disclosed herein, for legitimate transfer of ownership and/or removal of security aware apparatus between premises. Thus only unauthorised removal of electrical appliances results in failure.

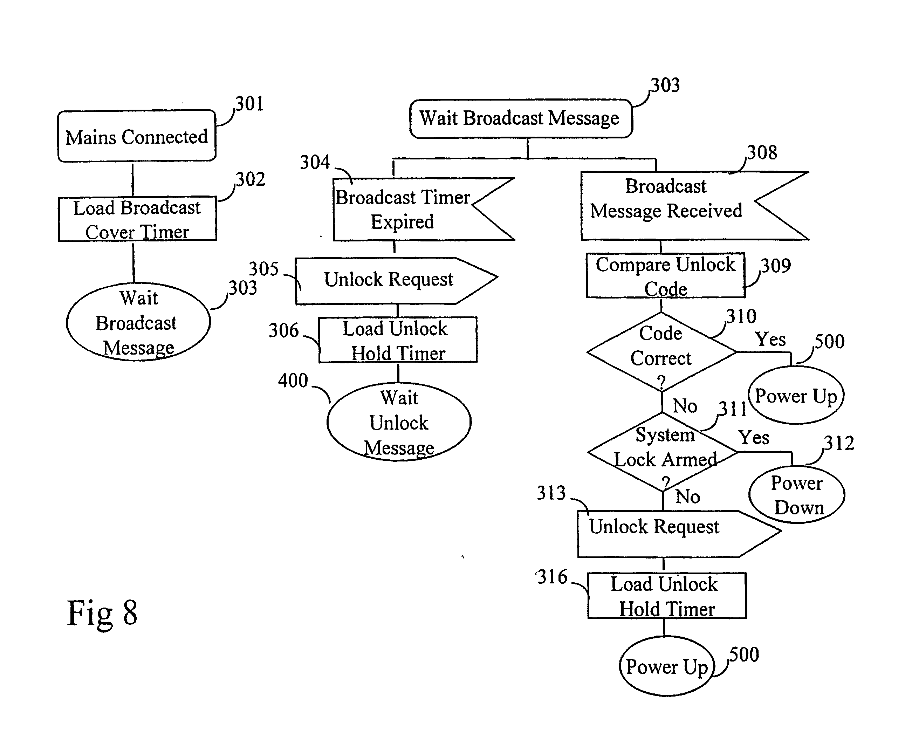

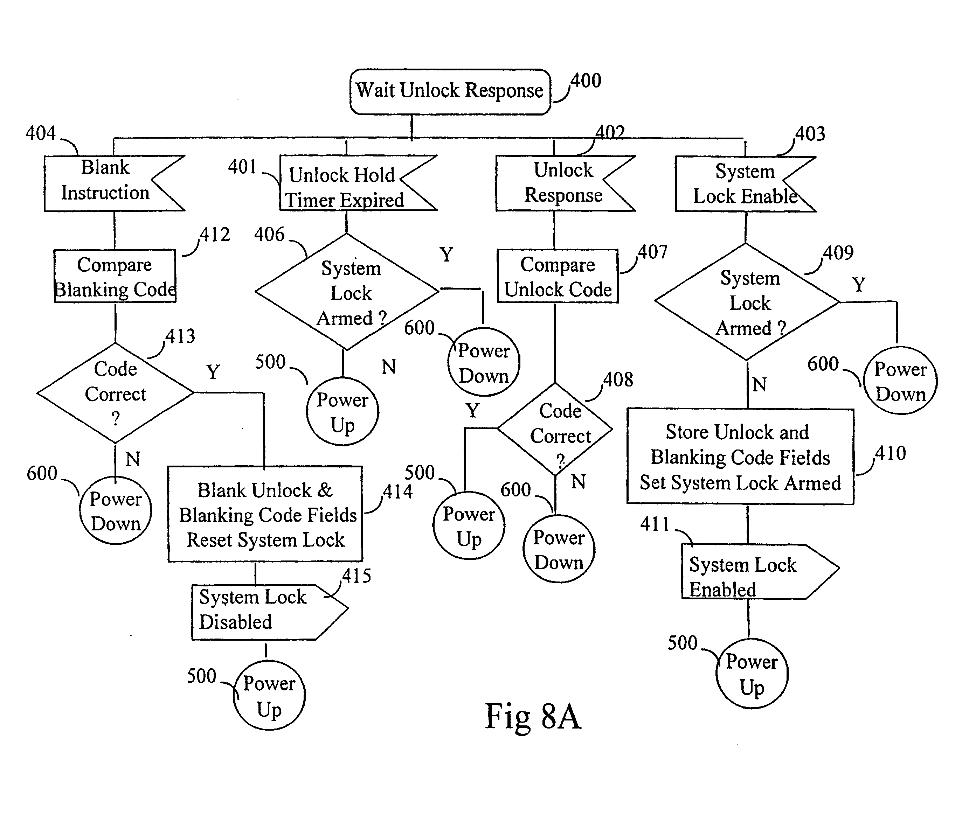

Turning then to Figure 8, we will now consider in brief the manner in which the security process within a security aware appliance functions. The process control unit 15, (Fig 2) which may be integral with the power supply 12 or may be a part of the operational circuitry shown at 17, is arranged to determine as hereinafter described whether power should be supplied or denied to other operational circuits 17 this capability being generally indicated by switch means 18. It will be appreciated that the process for denying power from the switched mode power supply 12 would not be so simple as a switch 18 which could be easily circumvented and will actually be better protected such that in order to overcome the security arrangements it will be necessary to replace the entire power supply unit or substantial components thereof. The process control 15 has access to data held in a data store 16 the purpose of which will become apparent. The data store 16 is a non-volatile storage element capable of holding an appliance identity, the location identity, one or more unlocking codes and a blanking code as indicated in Figure 4. Generally speaking the location code is a 64 bit code unique to the property in which the appliance is installed and which is derived from the CLI and by the remote operations centre of Figure 1 when a customer subscribes to the service.

The or each unlocking code is a 24 bit code one of which is unique to the customer premises 3. A further unlock code of 24 bits may be provided in a more complex arrangement, the further 24 bit unlock code being unique to the particular electrical apparatus 5. Where a unique code for the apparatus 5 is provided this will be generated on the first occasion in which the appliance 5 is plugged into the electricity supply and will be received in response to a request to the remote operation centre 4 as hereinafter described or by stand-alone home control unit. Throughout the present specification, wherever a stand-alone home control unit is provided rather than the more secure arrangement of a remote operation centre it may be assumed that the home control processor includes the same functionality which performs in a similar manner. Where there are substantial differences in operation these may be specifically considered - for example in one case providing a special plug in module for effecting appliance code blanking - or will be apparent.

The 24 bit blanking code is unique to the appliance and, as in the unique unlock code, is generated by the remote operations centre 4 in response to receipt of a request from the apparatus 5.

The purpose of the codes is firstly to locate the apparatus, that is to say the 64 bit appliance location code is unique to the home control unit 2 in a customer premises 3 and, once a security aware apparatus 5 is aware of its location, each time it is connected or disconnected from the mains electricity supply 6 its process controller 15 causes FSK interface 14 to transmit the location information and request an unlock code.

A unique unlock code for the appliance i.e. the 24 bit unlock code (if any) uniquely provided by the remote operations centre 4 or will be returned by the home control unit 2 to the appliance. Note that the home control unit 2 will only recognise its own location code. Where only house codes are in use the home control unit 2 will return the 24 bit house unlock code by way of the electricity supply line and the FSK interface 14.

If neither the appliance code nor the house code is received by the process controller 15 then power is denied to the operational circuits. In practice, power may be supplied to the operational circuitry for a pre-determined period, say 15 minutes, prior to closing down, to give sufficient time for an appropriate release code to be received.

The blanking code, which is unique to an electrical appliance and which is known only to the particular appliance 5 and to the remote operations centre 4 (except in the case of stand-alone operation) is used to permit the *bona fide* transfer of security aware apparatus between locations or upon sale of the equipment.

Referring to Figure 8, the operation of the process control function of the security aware apparatus of Figure 2 will now be described. On connection of power 301 by way of the electricity supply line 6 then a timer "load broadcast cover" timer 302 is started by process controller 15 which now waits to receive a broadcast message by way of the FSK interface 14. The purpose of the broadcast timer is to cover the eventuality where a major power disruption has resulted in a number of security aware appliances in the same customer premises 3 having a reconnection of electricity supply at the same time. If a catastrophic domestic electricity failure has occurred then, as hereinafter described, the home control unit 2 will also have lost electrical power. This will result, in the case of a volatile store type home control unit, in an application by the home control unit 2 to the remote operations centre 4 for a reload and the home control unit 2 then causes the broadcast of the 24 bit house unlock code.

Returning to Figure 3, the process controller now goes into an interruptible state 303 to wait for the broadcast message. The processor 15 will leave the wait broadcast message state 303 in response to one of two events, a first of which is that the broadcast timer set at step 302 will expire and the path indicated at 304 will now be followed. Once the broadcast timer expires as indicated at step 305 an unlock request is sent through FSK interface 14 to the electricity supply line 6. Note that the unlock request comprises the 64 bit house code as stored in the data store 16 and/or the apparatus identity 27,28. Once the unlock request has been transmitted then an unlock timer is loaded as indicated at step 306 and the processor 15 waits for an unlock message hereinafter described with reference to Figure 8A.

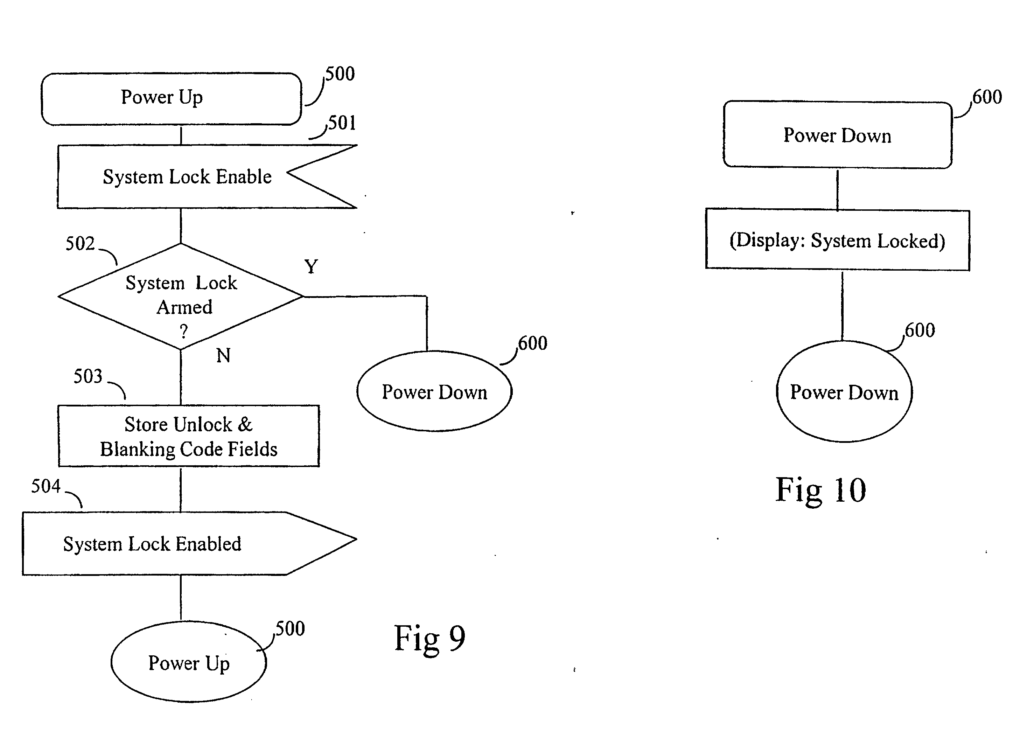

Returning now to the previous stable state, that is to say the wait broadcast message state 303, if as a result of catastrophic power failure a system restart has been required then a broadcast message will be received as indicated at step 308, the broadcast message being expected to be a 24 bit house unlock code. This code is compared at step 309 with the house code stored in the data store 16 of the appliance 5 and as indicated at step 310 if the code is correct the power supply 12 is allowed into normal operation through a power up routine described hereinafter with reference to Figure 9.

If an incorrect code is received and the system lock flag of the data store 16 is set to indicate that the particular piece of apparatus 5 is security aware, that is it has previously been connected then the process controller 15 causes the power supply 12 to power down in known manner so that power will not be supplied to the operational circuits 17 of the particular apparatus 5. If at step 311 the system lock is not found to be armed then at step 313 an unlock request will be broadcast in the same manner as at step 305 and an unlock hold timer will be commenced at step 316.

Turning now to Figure 8A the wait unlock response state 400 into which the processor 15 has been placed may be left as a result of either the unlock hold timer expiring 401, an unlock response 402, a system lock enable response 403 or a blanking instruction 404. Thus if the unlock hold timer expires as indicated at step 401 the system lock flag in the associated data store 16 is interrogated at step 406. If the system lock is not in the enabled state, that is to say the apparatus 5 has not previously been coded from the remote operations centre 4 or a subsequent blanking operation has been carried out then the process controller 15 goes into the power up mode. If however the system lock is armed and no unlock response is received then the process controller will enter the power down state and as indicated in Figure 10 will lock to that state until such time as the apparatus is disconnected from the electrical supply 6 and reconnected in a *bone fide* situation.

If now the response to the unlock request is an unlock code as indicated at 402 the unlock code is compared at step 407 with data held in the data store 16 and if the code is correct, then at step 408 the normal power up function occurs. Again if the code received is incorrect then the stable power down state 600 will be adopted. Note that if individual appliance codes are being used the apparatus will only unlock to its unique code once the broadcast timer has expired. If only house codes are in use then the house code and the blanking code is unique. The appliance code and blanking code will not be identical or related to each being individually randomly generated by the remote operations centre if appropriate as hereinafter described.

At step 403, if a system lock enable is received in response to the unlock request then at step 409 the system lock flag is interrogated to determine whether it was previously armed and if so this would indicate that the unit has been incorrectly plugged to a home control unit which has no previous record of this particular piece of apparatus 5 and therefore the system enters the power down state 600. If however the system lock is not armed then the unlock and blanking codes including the house code and separate apparatus unlock code, if applicable, are received and stored at step 410 after which at step 411 the system lock enable is set in the data store 16 and a system lock enabled message is transmitted and power up state 500 is entered. A system lock enable response should only be received when the apparatus is first plugged to a home with home control unit facilities or after the blanking field has been correctly activated as a result of an unlock response transmitted incorporating a blank instruction at step 404. The blanking instruction is received from the remote operations centre 4 and blanking instruction will only be transmitted under specific circumstances which a known owning customer will request.

On receipt of a blanking instruction the blanking code is compared at step 412 and provided that it is correct as indicated at step 413 then at step 414 all of the code fields in the data store 16 are blanked and the system lock enable flag is reset so that the apparatus is now in condition for transfer to other premises. Once the blanking of the data store 16 has been completed then the system will enter the power up state 500 in the normal manner.

If however at step 413 an incorrect blanking code is received in response to the unlock request then the system enters the power down stable state 600.

Note that once a correctly identified blanking instruction has been received the appliance is deregistered from the home control unit list at the remote operations centre 4 (if any) which will cause the home control unit 2 of the customer premises 3 to be updated as hereinafter described. De-registration may be performed in the home control unit 2 on receipt of the system lock disabled message transmitted by the FSK interface 14 at step 415.

Figures 9 and 10 show the two stable states of piece of apparatus 5 being respectively the power up state 500 and a power down state 600. In the power down state 600 the apparatus is effectively disabled and none of the operational circuits 17 will receive power. Where apparatus includes an appropriate display unit then as the microprocessor locks to prevent the apparatus functioning it may display an appropriate message such as system lock. In the power up mode 500, the power supply 12 will be supplying current to the operational circuits 17 in known manner but the process control 15 continues to monitor the FSK interface 14 for any false system lock enable states input. Note that the system lock enable message includes the electronic serial number of the apparatus which prevents false triggering to any given system lock enable message.

Thus if a system lock enable is received at step 501 the process controller 15 checks to determine whether the system lock is already armed in the data store 16 and if not at step 503 will store the unlock and blanking code fields received and will enable the system lock at step 504 and send an acknowledgement. The system then returns to the power up stable state 500.

Summarising then the operation of a security aware appliance 5 is controlled by messages transmitted by a process controller 15 through an FSK interface 14 to the electricity supply line 6, the FSK interface 14 also receiving messages whether directly from a home control unit 2 or from a remote operations centre 4 by way of a home control unit 2 for use by the process controller 15. The message format and messages transmitted by the appliance 5 are summarised in the following table:

**TABLE 1**

| **Message Name** | **Direction** | **Parameters** |
|---|---|---|
| Unlock Request | Outgoing | message type, message reference, equipment type, electronic serial number, appliance location code, checksum |
| System Lock enabled | Outgoing | message type, message reference, checksum |
| Broadcast Unlock Code | Incoming | message type, unlock code, checksum |
| Blank Instruction | Incoming | message type, message reference, blanking code, checksum |
| Unlock Response | Incoming | message type, message reference, unlock code, checksum |
| System Lock Enable | Incoming | message type, message reference, electronic serial number, appliance location code, unlock code, blanking code, checksum |

The parameters used (and hence stored in the data store 16 of the security aware appliance 5) are as follows:
- Message Type: 8 bit field indicating the type of message being sent
- Message Reference: 8 bit field used to link a series of message exchanges into a session
- Equipment Type: 64 bit field characterising the manufacturer and product uniquely. First 16 bits identify the manufacturer and will be controlled and issued by a remote operations centre body. The latter 48 bits are manufacturer allocated apparatus and model identities and will be entered into the system data store of a security aware apparatus during manufacture.
- Electronic Serial Number: 64 bit field uniquely identifying this product from other equipment of the same type (as identified by the previous field)
- Unlock Code (1): 24 bit field carrying the unlock code for the property (normally generated by the remote operations centre 4 on a per property basis)
- Unlock code (2): 24 bit field carrying a unique unlock code for the particular apparatus (if used) generated by the security provider (remote operations centre) as per appliance basis
- Blanking Code: 24 bit field carrying a blanking code for the appliance (generated by the security provider on a per appliance basis)
- checksum: 16 bit checksum allowing detection of potential message corruption

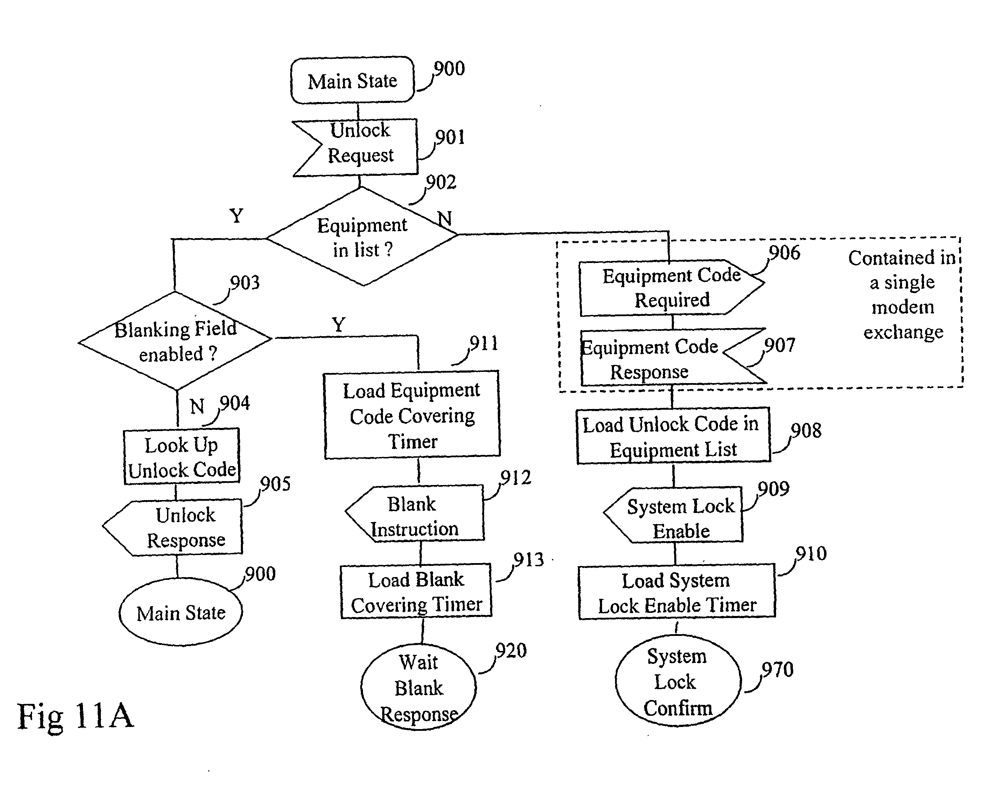

Having considered the components and action of a security aware apparatus 5, consideration will now be given to the home control unit 2 of Figure 1 in a customer premises 3. Turning now to Figure 11, on first connection of mains power to the electricity supply line 6 and on each subsequent connection of power to the home control unit 2 the processor 23 causes a connection to be established by the tone generator 22 through a telecommunications network (PSTN, Internet, radio system, cellular network) to the remote operations centre 4. A modem request for an equipment list is then transmitted and the remote operations centre 4 using locational data of the customer premises 3 responds with an equipment list as hereinafter described. In effect the equipment list identifies each apparatus registered as present together with its individual unlocking code (if any) and the house code previously mentioned. Thus in a single modem exchange as indicated at 801 the request is transmitted at 802 and an equipment list is received at 803 after which the network connection is released.

Note that if at any time power to the system fails data held identifying the house code and apparatus is immediately lost from the data store 24 and on reconnection the process is carried out again. In this way, even if the home control unit 2 is stolen along with property in the customer premises 3 it will not be useable to provide unlocking codes for the appliances 5. However, the home control unit 2 will include programmable storage for holding the access code (telephone number, Internet Address, E-mail Address) to the remote operator centre 4.

Assuming that there are items in the list, as indicated at step 804, the house unlocking code is broadcast at step 805 for comparison in individual appliances 5 as described hereinbefore with reference to Figure 8.

If however the list is empty the home control unit will move to its normal main state 900 which is its primary stable state at all times when power is connected.

Turning now to Figure 11A, the FSK interface 25 of Figure 3 monitors the electricity power line 6 for an unlock code request received from one of the security aware appliances 5 in the customer premises 3. On receipt of an unlock request, as indicated at step 901, the received appliance identity code is compared with the data held in the data store 24 to determine whether the equipment is currently listed as present and if so interrogates a blanking field associated with the particular piece of apparatus to determine whether that field is set, this occurs at step 903. For the avoidance of doubt it is noted that the blanking field for a piece of apparatus will only be enabled if the customer has previously had an interchange with the remote operations centre 4 to request removal of a piece of equipment from the list. In a stand alone control centre arrangement the blanking instruction arises as a result either of the customer keying a special code in to the control centre or by plugging a special module in to provide supply line signals to the control centre.

In the normal course of events the blanking field will not be enabled and the processor 23 looks at the appropriate unlock code for the requesting apparatus (or the house code where individual unlock codes are not in use), at step 904, and uses the FSK interface 25 to transmit the unlock response (namely the unlock code) at step 905 prior to returning to its normal state.

Returning to step 902, if the apparatus 5 forwarding the request is not present in the equipment list held in the data store 24, this will indicate that the appliance 5 has not previously been plugged into a system in the customer premises 3. The processor 23 therefore causes the establishing of a call through the networks as previously referenced and using the modem 22 interchanges with the remote operations centre 4 data identifying an equipment code request, at step 906, which request includes some identification of the apparatus plugged in, for example the manufacturing code, type and serial number as previously described. Causing the modem 22 to forward this information results in a response from the operations centre including an unlock code and blanking code which at step 909 is transmitted by way of the FSK interface 25 to the electricity supply line 6 for receipt by the process control 15 via FSK interface 14 of Figure 2 causing the appropriate response of Figure 8 i.e. the unlock response chain beginning at step 403 to be followed.

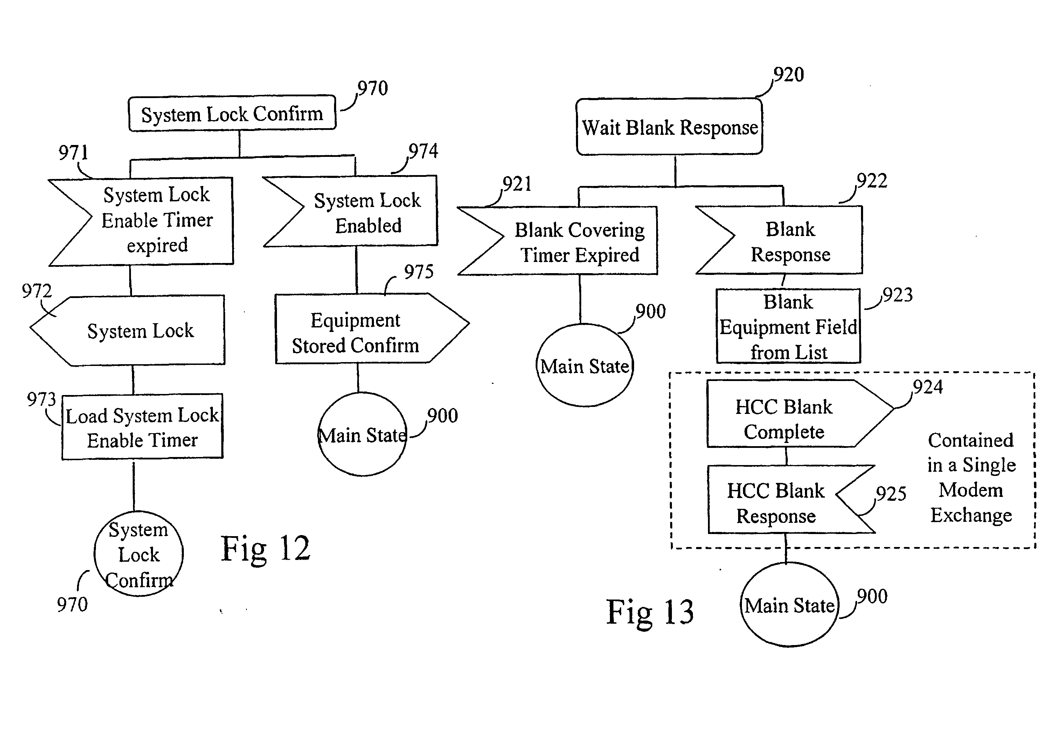

Note that the codes and the equipment are added to the list in the data store 24. Now at step 910, a timer is started awaiting the return of a system lock enable hereinafter described with reference to Figure 12.

Once the home control unit 2 is in the system lock confirm state 970 it will only leave after if the timer, set at step 910, expires as indicated at step 971 in which case it repeats the transmit of system lock enable at step 972 and recommences the timer or on receipt of a system lock enable message as transmitted at step 411 of Figure 8. Note that if the system lock is armed, as indicated at step 409 of Figure 8 in the particular piece of apparatus, then it is likely that the entire system installed in the customer premises 3 will lock up until such time as the appliance 5 is disconnected from the system.

However if the system lock enable signal is returned, as indicated at step 974, then the list in the data store 24 is marked accordingly at step 975 and the system returns to its main state 900 after transmitting a confirmation message to the remote operations centre 4 (if appropriate).

Returning now to Figure 11A and particularly to step 903, if as hereinbefore referred the blanking field has been enabled as a result of a customer application to the remote operations centre 4 (or direct instruction as referred to above), then after step 903 a timer is loaded at step 911, following which the unlock and blanking codes are transmitted by way of the FSK interface 25 of Figure 3 to the electricity supply line 6 this being received by the appropriate FSK interface 14 of Figure 2 in apparatus to be blanked. A blank covering timer is loaded at step 913 after which the equipment enters a wait blank response state at 920 (Figure 13). If the blank covering timer expires 921 (Figure 13) prior to receipt of a response from the apparatus 5 which is to be blanked then the system simply returns to the main state since this would indicate that an incorrect code has been identified at step 412 of Figure 8.

However, if the correct blanking code has been transmitted to a piece of electrical apparatus 5 then a blank response, transmitted at step 415 of Figure 8, will be received as indicated at step 922 of Figure 13. Once the blank response has been received from the piece of apparatus indicating that the security aware apparatus concerned is now clear for transfer to other premises it is removed at step 923 from the list held in the data store 24 and a call is established by way of the network to the remote operations centre 4. In the case of stand alone apparatus, once blanking has occurred then the apparatus is simply removed from the home control unit listing.

In a single modem interchange the processor 23 causes the transmission of a message indicating that the blanking function has been completed and will receive from the remote operations centre a revised listing for storage in the volatile data store first acknowledging that blank response has been acknowledged. This occurs at steps 924 and 925 of Figure 13. If the remote operations centre is aware that adjacent properties or properties likely to share a common electricity supply such as in households divided into apartments but having separate telephone line 7 and home control units 2, three bits of the message type will be used to identify messages directed to a particular home control unit 2, and the home control unit 2 will use the particular message type on first set up to program a communications channel identified by those first three bits to security aware appliances in particular premises.

Intelligence may be built into the remote operations centre 4 enabling the system to cause blanking of apparatus wrongly allocated to a particular home control unit and subsequent correction when the blanked apparatus is reconnected. Thus, for example, if a domestic power failure occurs in one property subsequent reconnection will cause the home control unit 2 to broadcast its own house code but apparatus connected on the same power circuit will time out and request a code through the adjacent home control unit 2. This may be identified to cause reallocation.

The situation mentioned is thought unlikely where correct balancing of local power supplies occurs. Suitable inductive correction in mains electricity meters should avoid such problems being significant.

The message formats and messages incoming and outgoing to and from the home control unit 2 are as shown in Table 2 in which the remote operations centre 4 is identified by the legend ROC and a piece of electrical apparatus 5 is identified as SWA.

**TABLE 2**

| **Message Name** | **Direction** | **Parameters** |
|---|---|---|
| Request Equipment List | Outgoing (to ROC) | message type, checksum |
| Equipment Code Required | Outgoing (to ROC) | message type, equipment type, electronic serial number, checksum |
| HCC_Blank Complete | Outgoing (to ROC) | message type, equipment type, electronic serial number, checksum |
| Equipment Stored Confirm | Outgoing (to ROC) | message type, equipment type, electronic serial number, checksum |
| Broadcast Unlock Code | Outgoing (to SWA) | message type, unlock code, checksum |
| Blank Instruction | Outgoing (to SWA) | message type, message reference, blanking code, checksum |
| Unlock Response | Outgoing (to SWA) | message type, message reference, unlock code, checksum |
| System Lock Enable | Outgoing (to SWA) | message type, message reference, electronic serial number, appliance location code, unlock code, blanking code, checksum |
| Receive Equipment List | Incoming (from ROC) | message type, number of entries, appliance location code, unlock code, |
| | | ROC Phone number 1, ROC Phone number 2, [1..number of entries) (equipment type, electronic serial number) , checksum |

| | | |
|---|---|---|
| Equipment Code Response | Incoming (from ROC) | message type, appliance location code, unlock code, blanking code, checksum |
| HCC_Blank Response | Incoming (from ROC) | message type, checksum |
| Unlock Request | Incoming (from SWA) | message type, message reference, equipment type, electronic serial number, appliance location code, checksum |
| System Lock Enabled | Incoming (from SWA) | message type, message reference, checksum |

The parameters used in the above are as follows:
- Message Type: 8 bit field indicating the type of message being sent
- Message Reference: 8 bit field used to link a series of message exchanges into a session
- Equipment type: 64 bit field characterising the manufacturer and product uniquely, first 16 bits characterising the manufacturer and will be controlled and issued by the remote operations centre, the latter 48 bits being under manufacturer control
- Equipment Serial Number: 64 bit field uniquely identifying the product from other equipment of the same type.
- Appliance Location Code: 64 bit field uniquely identifying the security provider (first 24 bits identifying the remote operations centre) and the property within the domain, that is the customer premises 3 identified by the latter 40 bits
- Unlock Code: 24 bit field carrying the unlock code for the property (house code) or the unlock code for the apparatus within the property as appropriate
- Blanking code: 24 bit field carrying the blanking code for the appliance generated by the operations centre on a per appliance basis
- Number of Entries: 16 bit field indicating the number of appliances protected at customer premises 3
- Checksum: 16 bit checksum indicating potential message corruption.

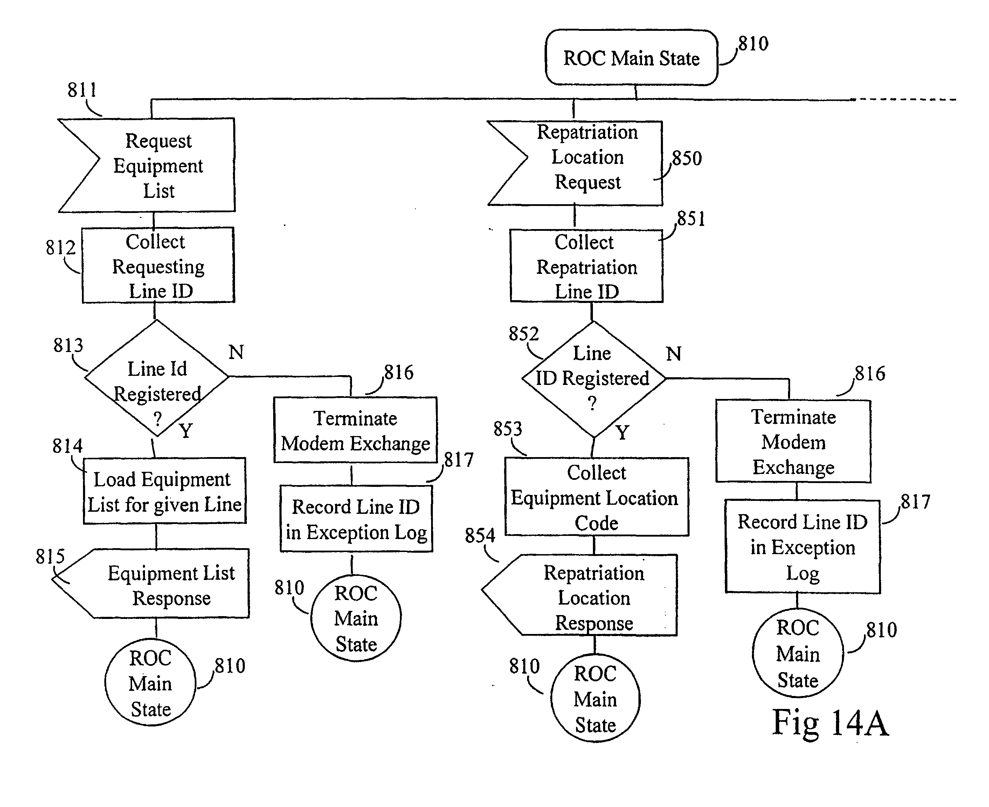

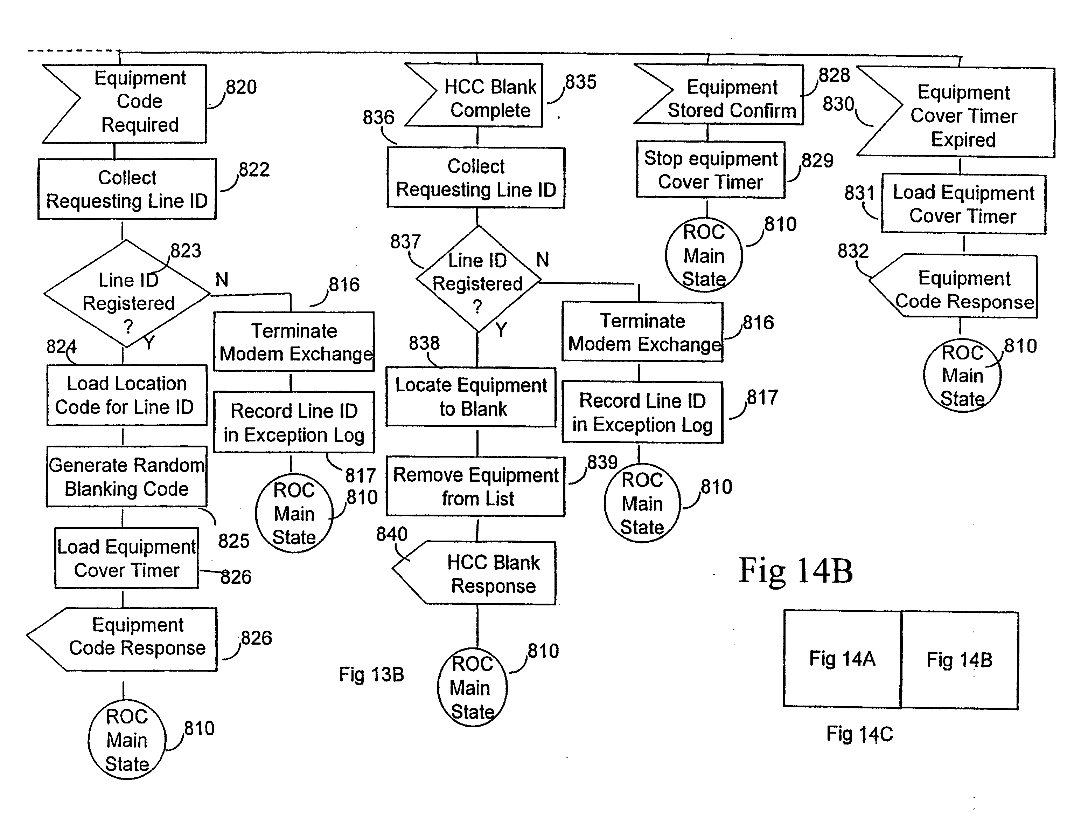

Referring now to figure 14 the remote operations centre for use by the systems herein described is fully described in the previously referenced PCT application. However, for the completeness operational flow charts of the centre are included in this specification.

Multiple instances of the ROC main state which is the sole state of the remote operations control centre 4 may be running at any time to handle a multiplicity of calls which may arrive by way of the telephone lines, electronic mail message, internet communication or cellular communication or by way of an electrical distribution system. Considering just a single instance of the operation of the remote operation main control state 810, on receipt of an incoming call signalling by way of a connected modem will indicate the request which has been received from the home control unit 2 of a customer premises 3 The most likely input from a home control unit 2 is that shown in 811 that is to say a modem signal requesting an equipment list from the ROC.

The CLI or other locational data will provide line identity to the processor as indicated at step 812 and the processor will compare the requesting line identity with a list of registered line identities held in a data store. If at step 813 a registered line identity or location code is found then the equipment list for that location together with the house code and individual equipment unlocking codes (if appropriate) and any blanking information are retrieved from the data storage unit at step 814. This information is then passed by way of the modem at step 815 for use by the home control unit 2 as indicated in Figure 11.

If however, at step 813 a request has been received from an unregistered line or location at step 816 the interchange of data with the remote customer is terminated and the line identity and any further information received in the equipment list request are recorded in an operations and maintenance exception log which may be used to determine attempted fraudulent use of the system or to identify the location of a potentially stolen control centre unit 2.

As has been mentioned at step 814 any blanking code request is returned to the home control unit for use at step 903 of figure 11A. The blanking field together with the stored blanking code for a particular piece of equipment (or for all of the equipment at a designated location) will only be present as a result of either the action of control centre staff in response to a customer's request or as a result of a controlled access using multifrequency tones by way of the telephone line to provide personal identification numbers (PIN) or other security so that the customer can request blanking of one or more pieces of security aware apparatus 5.

Considering now an equipment code request from a home control unit 2, when the request is noted as indicated at 820 the locational data is obtained at step 822 and as previously described is compared with valid location or line identities in the data store. (Step 823). Again an invalid line identity will be handled in the same manner as steps 816 and 817 while on receipt of a valid identification the location code for the particular customer premises 3 is loaded from the data store and random blanking codes and/or unlocking codes dedicated to the particular piece of equipment are generated at step 825 and temporarily stored. An equipment cover timer is loaded at step 826 and at step 827 the code response is transmitted by way of the modem 33 to the home control unit. The system now waits either for an equipment store confirm message from the home control unit 2 as indicated at figure 12 in which case as indicated at step 828 on detection of the equipment store confirm the equipment cover timer is stopped at step 829 and the appropriate list for the registered line identity is updated in the data storage unit with the identity of the new piece of equipment together with it's appropriate blanking and unlock codes as generated previously. If however, the equipment cover timer expires as indicated at step 830 then the system at step 831 restarts the timer and makes a further attempt at step 832 to forward the equipment code response to the home control unit 2.

The final incoming signal from a home control unit 2 at a customer premises 3 is that of an HCC blank complete detected at steps 835 which comes back as a result of blanking being completed at a home control unit as indicated at steps 924 and 925 of figure 13. On receipt of the HCC blank complete indication from a home control unit 2 to the location is collected at step 836 and at step 837 the usual check is made to ensure that this is from a valid location. Again steps 816 and 817 in which the modem exchange is terminated and the line identity and other information recorded in an exception log is provided for non-registered locations.

Once the check on the identity has been completed, the appropriate record is located in the data store and the particular piece of equipment is deleted from the equipment list at step 839. A HCC blank response is transmitted at step 840 which response may include a revised complete equipment list for the given location if required.

A further advantage of the present invention is the ability to identify from a stored location code that is the house location code, of a piece of apparatus the origin of a wrongly located appliance. Thus, security forces or police might be provided with repatriation units whereby recovered apparatus can be identified.

Thus, if the remote operations centre 4 receives a repatriation location request 850 the repatriation line identity is collected from the CLI interface 32 and the usual check to ensure that the line is registered as a repatriation line is carried out at step 852.

If the line is not registered for repatriation identity purposes the exchange of data via the modem 33 is terminated and the line identity and other information concerning the transaction is transferred to the exception log at step 817.

Assuming that the repatriation location request originates from a valid location as identified at step 852, the equipment location code received is used to look up in the data store address details for the original source of the apparatus 853 which information is transmitted by way of the modem at step 854 to the repatriation equipment.

While not included in the flowcharts of Figure 13 it will be appreciated that more complex functions are readily provided by the system. Thus for example when an equipment code is required at step 820 the system may be adapted to receive the manufacturers code, equipment type and serial number from the security aware apparatus being installed at the customer premises 3. This information may be used to access manufacturers databases or distributors databases to ensure that the equipment is of a bona fide origin.

Bona fide registered equipment repairers may be permitted to receive on a single call an unlocking code for a piece of security aware apparatus but would not be allowed to receive a blanking code such that so long as the apparatus remained in the possession of the repairer it could be unlocked for the purposes of repair but could not be blanked for onward distribution.

Timed locking of apparatus could also be provided such that if customer premises were not being occupied or parents wish to restrict access to particular pieces of equipment then temporary locking could be provided on request. Thus any request for an equipment list arising from the designated premises, if the home control unit 2 detected a request from a piece of apparatus not included in the list might include a return list indicating that the apparatus was to remain locked.

Release of the locked apparatus could only occur on a subsequent request for an equipment list after the expiry time set for unlocking. The following message formats shown in Table 3 apply at the remote operations centre.

**Table 3**

| **Message Name** | **Direction** | **Parameters** |
|---|---|---|
| Request Equipment List | Incoming | message type, checksum |
| Equipment Code Required | Incoming | message type, equipment type, electronic serial number, checksum |
| HCC_Blank Complete | Incoming | message type, equipment type, electronic serial number, checksum |
| Equipment Stored Confirm | Incoming | message type, equipment type, electronic serial number, checksum |
| Repatriation Location Request | Incoming | message type, appliance location code, equipment type, electronic serial number, checksum |
| Receive Equipment List | Outgoing | message type, number of entries, appliance location code, unlock code, ROC Phone number 1, ROC Phone number 2, [1..number of entries] (equipment type, electronic serial number) , checksum |
| Equipment Code Response | Outgoing | message type, appliance location code, unlock code, blanking code, checksum |
| HCC_Blank Response | Outgoing | message type, checksum |
| Repatriation Location Response | Outgoing | message type, owner's name, [1..3] address line, telephone number, checksum |

The parameters used in the above are as follows:
- Message Type: 8 bit field indicating the type of message being sent
- Message Reference: 8 bit field used to link a series of message exchanges in to a session
- Equipment Type: 64 bit field characterising the manufacturer and product uniquely First 16 bits characterise the manufacturer under control of a central domain. The later 48 bits are under manufacturer control.
- Electronic serial Number: 64 bit field uniquely identifying this product from other equipment of the same type.
- Appliance location Code: 64 bit field uniquely identifying the remote operations centre (first 24 bits) central domain controlled) and the property (later 40 bits under control of the remote operations centre)
- Unlock code: 24 bit field carrying the unlock code for the property (generated by the remote operations centre on a per property basis); or 24 bit field carrying an unlock code specific to the equipment (generated by the remote operations centre)
- Blanking code: 24 bit field carrying blanking code for the appliance generated by the remote operations centre on a per appliance basis
- Number of entries: 16 bit field indicating the number of appliances protected at the selected property
- Owners name: 20 ASCII characters
- Address line: 20 ASCII 2 characters
- Checksum: 16 bit checksum indicating potential message corruption

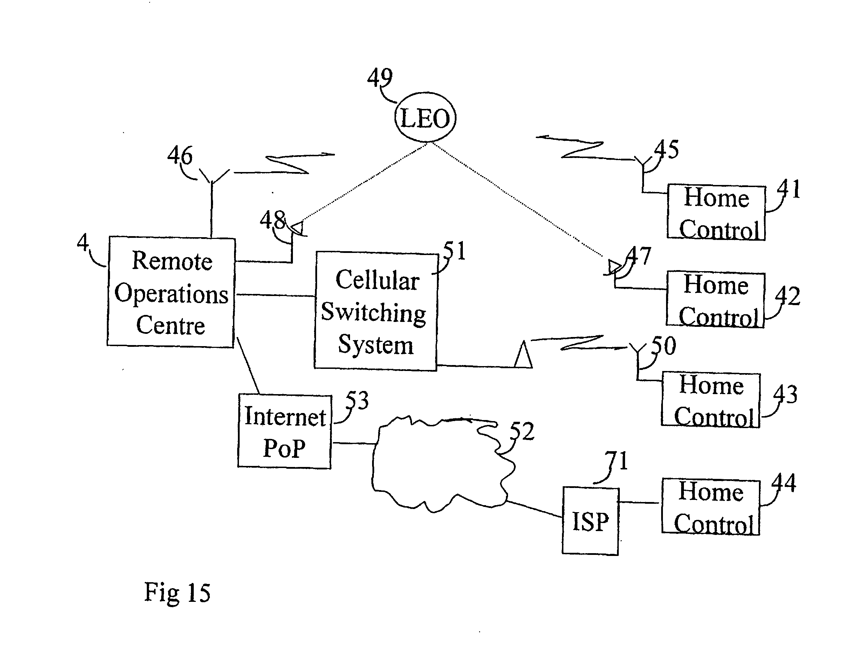

Turning now to Figure 15, as previously mentioned, a home control unit 2 (of Figure 1) communicates with a remote operations centre 4 by way of a telephone line. The remote operations centre 4 utilising CLI to determine the location of the requesting home control unit and to base transfer of information thereon. In the present invention a number of home control units operate in a similar manner to that previously described carrying the functions of list creation and maintenance and code control for release of apparatus connected within the home. In a further development the home control unit 41 may communicate directly with the remote operations centre 4 by way of radio frequency signals or microwave signals. Thus as indicated at 45 the home control unit may be connected to a transmitting aerial while the home control unit 4 has a receiving aerial 46. In this case the home control unit may have its identity burnt into a storage medium. This is not however a preferred solution since if the home control unit 41 was stolen with the equipment in the house, it would be possible for an unauthorised user to operate stolen apparatus. Nevertheless, once the remote operations centre 4 is aware of the theft of a home control unit box, including a burnt in identity, it would thereafter decline to provide information to the calling home control. As an alternative to the communication method of home control unit 41, a home control unit 42 may communicate with the remote operations centre by way of a low earth orbital satellite system such as indicated by transmission dish 47 and receiver 48 at the remote operations centre 4. In this case signals from the home control unit to the remote operations centre are reflected by a low earth orbital satellite 49. Again the identity of the home control unit 42 may be burnt into the system or may be, as hereinafter described, determined by other means.

In yet a further communications method the home control unit 43 is connected by way of a GSM system 50 to a cellular switching system 51, which communicates with the remote operations centre 4. In this case the GSM identity of the home control unit transmission system is known to the cellular switching system and therefore a CLI can be provided the remote operations centre. Further alternative coding of the home control unit identity may be provided in addition to the cellular switching system identity or the alternative location methods hereinafter described may be used.

One potential advantage of using modifiable home control identities might be the use of an insertable subscriber identity module (SIM) card which may allow the user to transfer to an alternative home and/or to take the SIM card out of the home control unit 43 when not in use, for example when premises are to vacated for a period of time.

Finally, home control unit 44 is shown as being connected, for example, by way of an internet service provider link 71 and the internet or world-wide web 52 to the remote operations centre by way of an internet point of presence 53. Again such a connectionless kind of communication either in real time or by way of electronic mail communication will allow transfer of data between the remote operations centre and the home control unit 44. Thus for each of the functions required to be carried out by a home control unit an e-mail message, for example could be generated comprising the coded information from a stealth aware appliance to be transmitted by way of connectionless messaging to the remote operations centre where a return e-mail can be generated and sent back to the home control unit 44.

In a still further development of this mode of operation, e-mail messaging capability could be built into stealth aware appliance 5 for example, so that in the absence of a home control unit 44 direct communication between a stealth aware appliance and the remote operations centre could be established, the remote operations centre being responsive to a serial identity in electronic form from the appliance to return appropriate unlock and blanking codes as required.

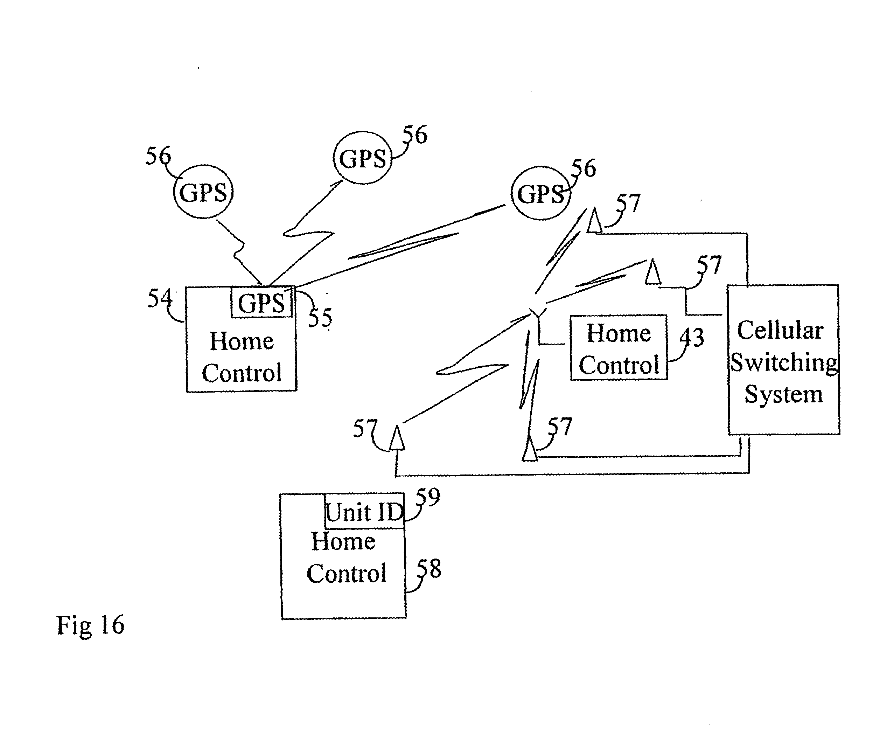

In each of the scenarios of Figure 15 the difficulty of identifying with certainty the presence of a home control unit with a built in serial number and tying it to a particular location has been noted. Thus in Figure 16, to which reference is now made, alternative positional location systems may be used. For example, it is known that global positioning systems (GPS) using a number of satellites with a fairly simple module can locate a unit to an accuracy of less than 30 metres on a global basis. With more sophisticated systems location to a little as three metres is possible. Thus providing a home control unit or a directly communicating self-aware apparatus with a GPS unit, as shown in the home control unit 54, as GPS 55 permits the near exact location of the requesting home control unit to be identified by use of triangulation from two or three GPS satellites representatively shown at 56. thus, prior to communicating with a remote operations centre the home control processor will utilise the GPS 55 to determine its co-ordinates and these co-ordinates are transmitted in the message to the remote operations centre 4. This enables a secure home control unit 54 to be used where CLI, for example, is not a practicality or where e-mail messaging, internet communication, or non-locational radio communication with the remote operations centre 4 is in use. In this case, the remote operations centre 4 need not even be in the same country or connected to the same network as the home control unit since the data store at the remote operations centre in respect of the particular home control unit will be based on its GPS identity.

In the case of the home control unit 43 (of Figure 15) location of the home control unit is possible by use of a triangulation system of the cellular switching system 51. As described in published patent application number 824840 comparison of time delay in signalling between the transmitting aerial 50 of the home control unit 43 and a number of cellular operator receiving sites, schematically represented at 57, allows calculation of the location of the home control unit. Thus in addition to the security of the SIM in the home control unit 43, further locational detail can be obtained and passed to the remote operations centre 4.

Finally, for completeness and as previously mentioned, the home control unit 58 shows a unit identity module 59 which may be used in place of or in addition to each of the locational identity methods of CLI, radio signal triangulation and GPS transmissions.

In a further alternative communication between a home control unit and a remote operations centre 4, direct communication by way of the mains power line, for example by means of a locational chip built into an electricity meter connected to the mains electricity distribution network could be used. Thus a service provider, potentially for example electricity distribution companies, could provide a control centre with which communication over the electricity supply using known protocols could be used to transfer data to and from a remote operations centre. This may be advantageous, for example in apartment blocks where an electricity substation within the block could provide service to all of the apartments connected thereto. The full functionality of the remote operations centre would thus be provided monitoring signals on a loop distribution for unit identity and code requests. Again, where a communal operations centre in an apartment block is in use it may be possible to have direct communication between an apparatus 5 and the operation centre directly by way of the electricity supply line.

Having considered alternatives for communication between a remote operations centre and a home control unit alternative communication techniques between apparatus 5 and the home control unit 4 now fall to be considered.

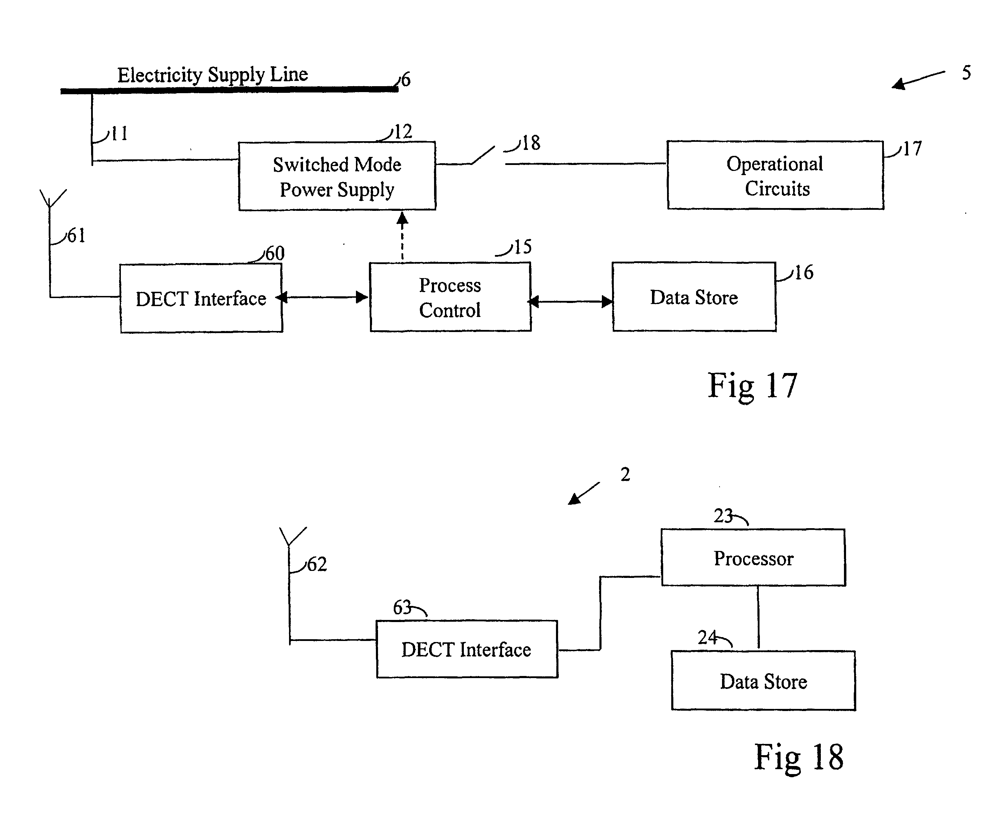

In a first alternative development, referring to Figures 17 and 18, in place of the FSK interface (14 of Figure 2) digital electronic cordless telephone protocols (DECT) as used for communication between telephone handsets and base stations in domestic premises may be provided. Thus, a DECT interface 60 transmits the requests as previously described, such requests arising from the reconnection of the switch mode power supply 12 and this communication is received on a corresponding DECT unit 63 incorporated in the home control unit 2. The signalling is received by way of schematically represented aerial 62 which will also transmit the return information to the apparatus 5 by way of its DECT interface 60. It will be appreciated that other low power communications techniques could be used, for example low power radio frequency in other forms than coded in accordance with DECT protocols could be used.

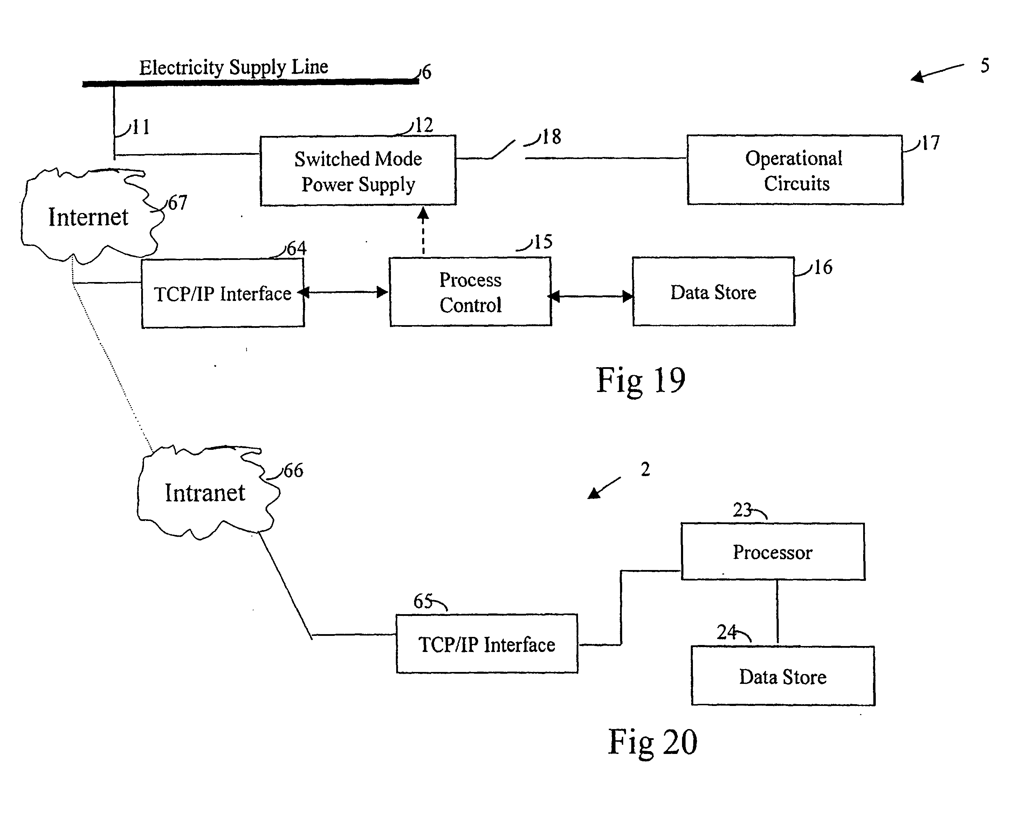

Figures 19 and 20 show a modification of apparatus 5 and home control unit 2 in which the FSK interface in the apparatus 5 is replaced by a TCP/IP interface which may generate electronic messages for transmission either by way of an intranet connection 66 to a corresponding TCP/IP interface 65 of the home control unit or may communicate directly with a remote operations centre by way of the internet 67. It will be appreciated that where TCP/IP interface communication using an intranet between security aware apparatus 5 and a home control unit 2 is in use, then all of the other options for communication between the home control unit 2 of Figure 20 and the remote operations centre 4 are still available.

It will also be noted that the use of GPS directly in security aware apparatus 5 would enable e-mail messaging directly to the internet in a secure manner since even if the internet address of either home control unit or the security aware apparatus is changed, the transmitted data will reflect the true location of the requesting apparatus.

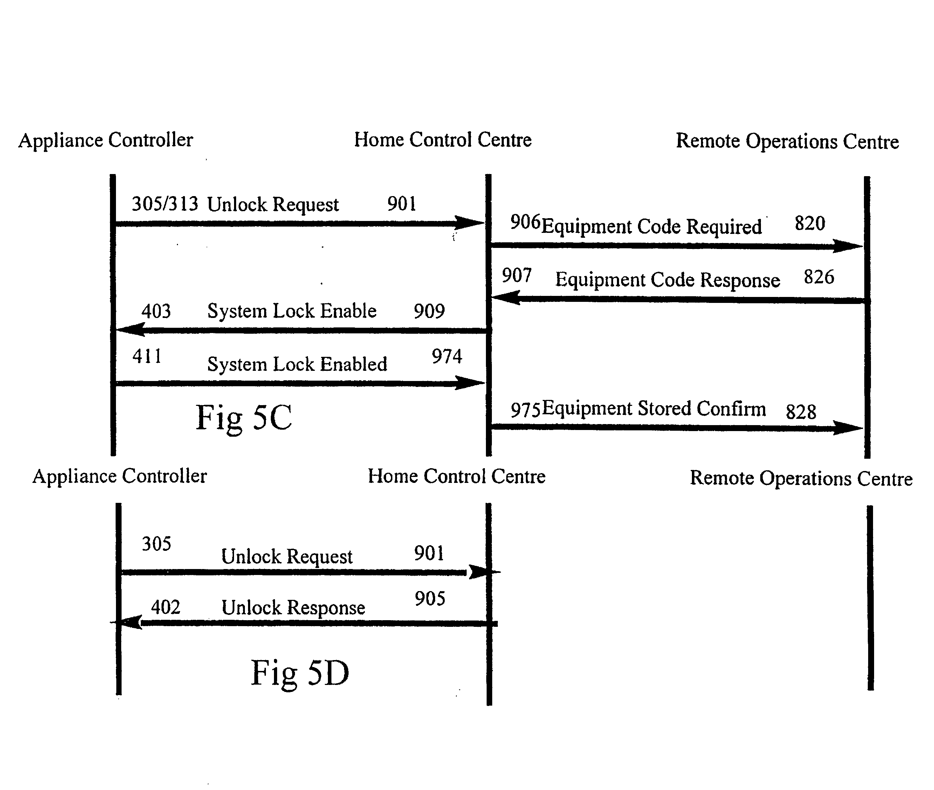

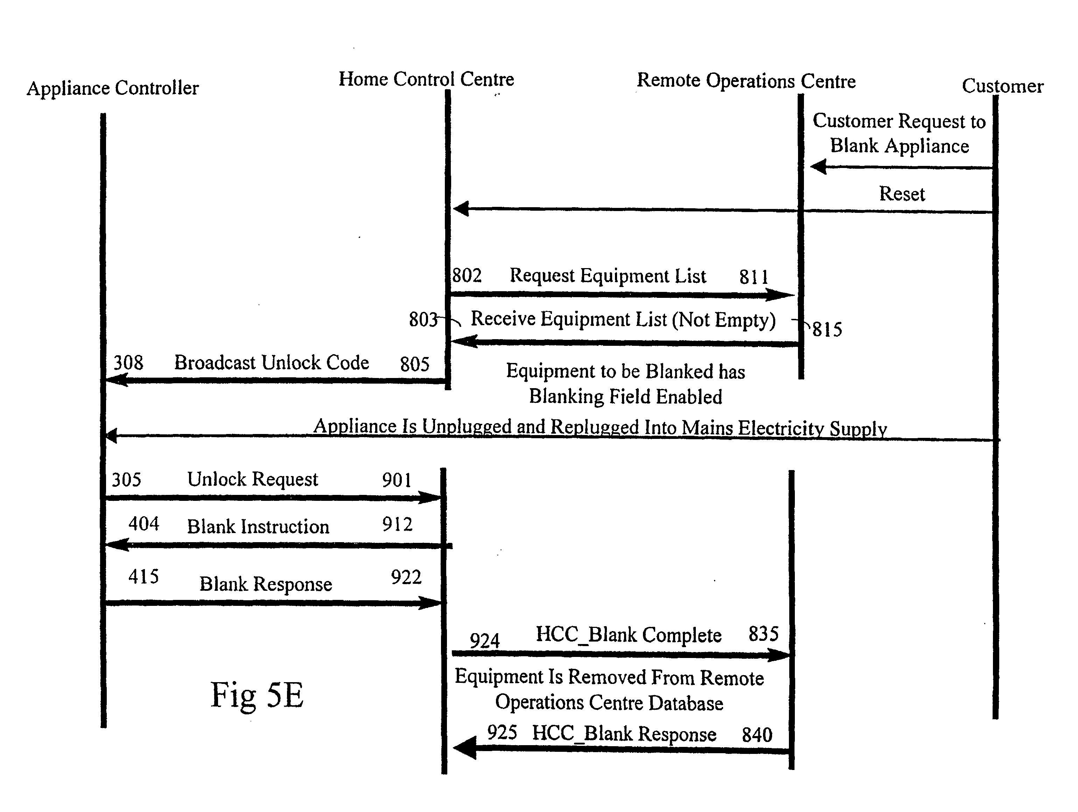

Having considered various hardware aspects of the apparatus, consideration is now given to the signalling interchange between an appliance, a home control unit and a remote operations centre where such is provided. Referring then to Figure 5 and also to Figures 11 and 14 hereinbefore described, in Figure 5A is shown signalling from the home control unit to the remote operations centre request equipment list 802 received by the remote operations centre as indicated at step 811. In return at step 815 the remote operations centre returns signalling which is either an empty equipment list 803 or, as indicated in Figure 5B, a list containing apparatus identities and codings. As indicated in Figure 5B, an unlock code is broadcast (805 of Figure 11) received by security aware apparatus at 308.

Moving now to Figure 5C and referring additionally to Figure 8, on first connection of the apparatus or on connection of uncoded security aware apparatus, when the broadcast timer has expired an unlock request is sent at step 305. In Figure 5C if the requesting equipment is not in the list then an equipment code required message is sent 906 to the remote operations centre, which is received at step 820 (Figure 14B) resulting in an equipment code response being transmitted to the home control unit at step 826. When received in the home control unit 907 this results in a system lock enable being transmitted 909 back to the requesting apparatus, received at 403 of Figure 8A and ultimately results in a response of system lock enabled to the home control unit at 411 received (Figure 12 at 974) in the home control unit which transmits an equipment store confirm message to the remote operations centre at 975. The remote operations centre uses the equipment stored confirm message received at 828 as a confirmation that the equipment has been coded.

Turning to Figure 5D, if the equipment, which sends an unlock request at 305 is in the list as indicated at 902 then, assuming the blanking field is not enabled, an unlock response is sent at 905 which is received at 402 of Figure 8.

Figure 5E shows a sequence of events leading to blanking of an appliance. In this case the customer will have communicated as indicated with the remote operations centre to request blanking of appliance. Subsequent to this the customer will cause the home control unit to reset either by disconnecting power or by use of a reset button which will cause the home control unit to contact the remote operations centre with a request equipment list message (802-811) which will result in an equipment list being returned (815-803) to the home control unit with the blanking field of the appropriate appliance set. Immediately on receipt of the equipment list, because the list is not empty and the home control unit assumes disconnection of house power supply, it will broadcast the general unlock code at 805. Subsequently, when the customer unplugs the particular appliance or at least disconnects mains power and then causes its reconnection, as previously described at step 305, an unlock request will be transmitted by the appliance controller to the home control unit received at 901. This will result in a blank instruction being returned at step 912 from the home control unit which, as shown Figure 8A at step 404, will result in a system lock disabled response at 415 indicating that blanking has been completed. As shown in Figure 13, once a blank response is received at 922, an home control unit blank complete message is transmitted to the remote operations centre at 924 resulting in an home control unit blank response being transmitted back to the home control unit from the remote operations centre at 840.

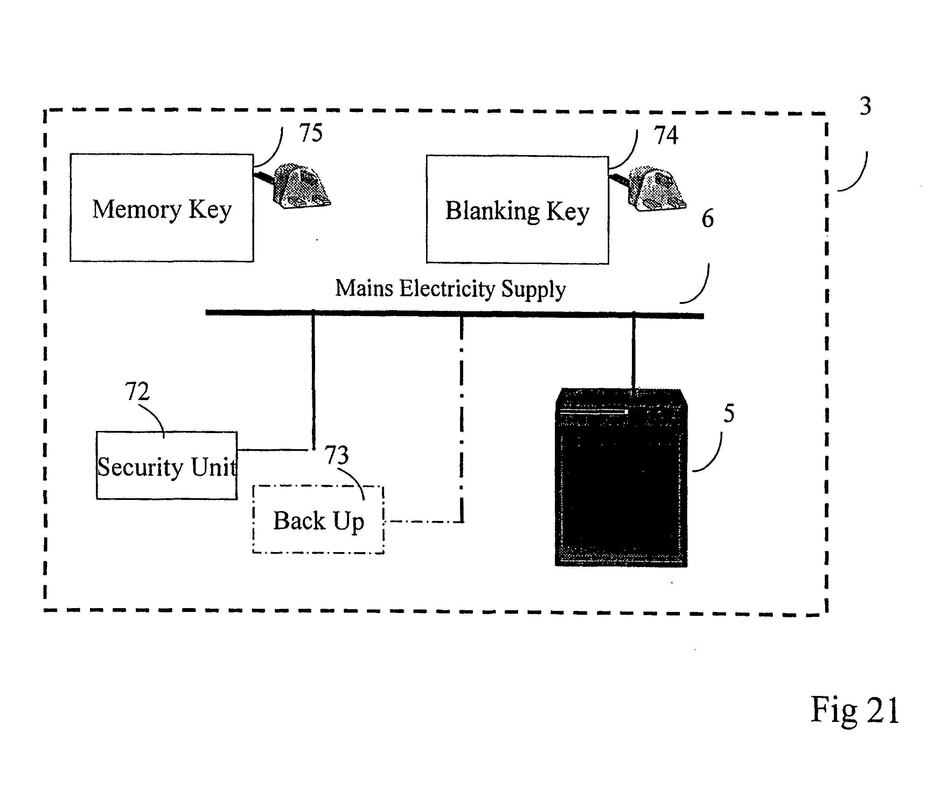

Figure 21 shows the component parts of a security system using security aware appliances 5 of exactly the same form as hereinbefore described, but arranged to operate without use of a remote operations centre. Thus, as shown in figure 21 to which reference is now made, the security aware appliance 5 is connected to the mains electricity supply 6 within or connected to which is a security unit 72 either in the form of a plug in module or built in in some way to the electricity supply system as, for example, a dummy power socket or built into the premises electricity metering appliance. Also shown are two special units, a blanking key unit 74 and a memory unit 75 the function of which is noted hereinafter.

As an alternative to the use of a memory unit 75 as hereinafter referenced, a back-up security unit 73 may be provided which shadows the output of the security unit 72 since there is no other central store of unlocking and blanking coding for appliances 5 connected to this kind of system. Thus, if a failure of a security unit occurred it could render all appliances in security aware premises 3 to be rendered unserviceable.

The security units 72, 73 comprise the same components effectively as shown in Figure 3, but may additionally include the unit id 59 of Figure 16 or a GPS unit 55 which could be used by the stand alone control unit in generating codes and which, unless previously blanked, could result in the security unit not functioning if it is moved from its known GPS location.

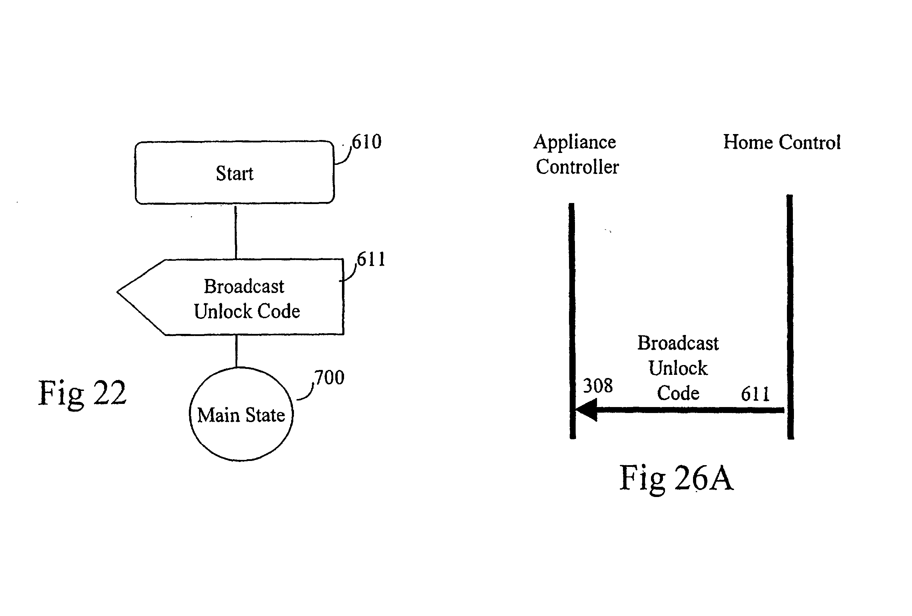

As with the home control unit 2 of Figure 1, when the unit is first connected to power, as indicated in Figure 22 at 610, it will broadcast an unlock code at 611 before entering its main state at 700. The broadcast unlock code 611 is always broadcast if ever power is disconnected from the security unit 72 and then reconnected. The function of the unlock code is as hereinbefore described to permit equipment connected to the system to receive power on reconnection after a mains failure. This avoids multiple unlock requests being transmitted simultaneously from reconnected apparatuses.

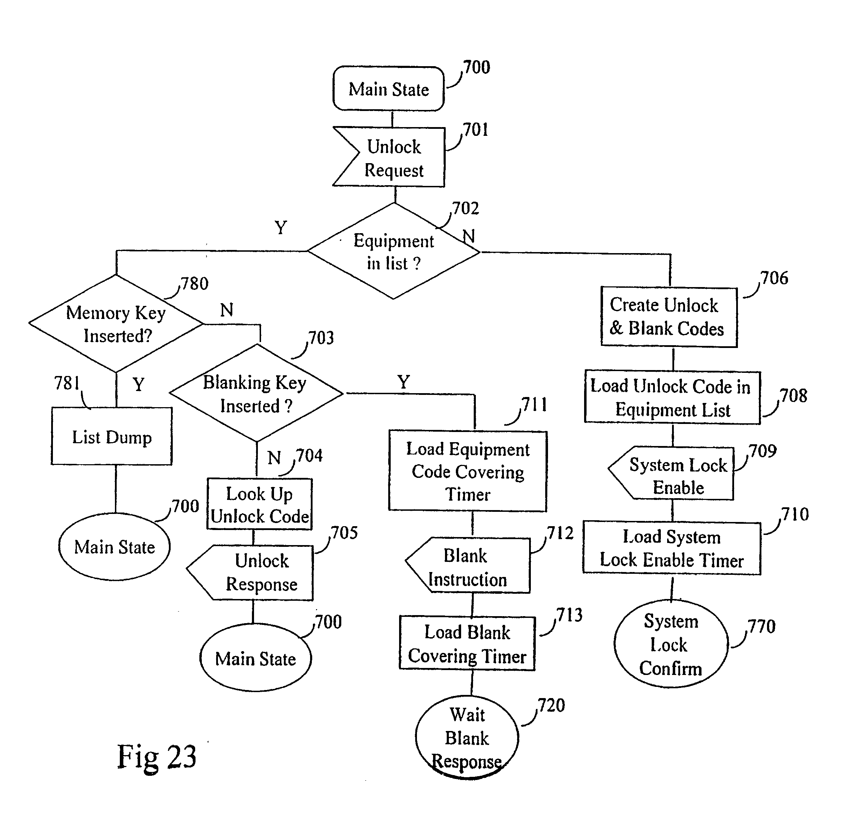

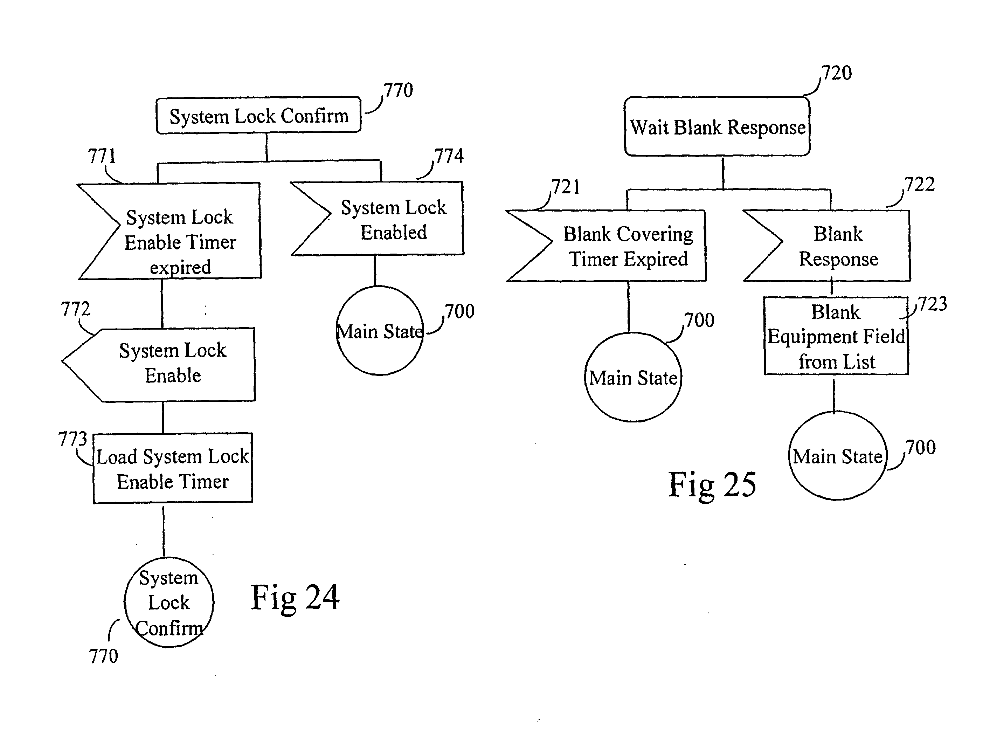

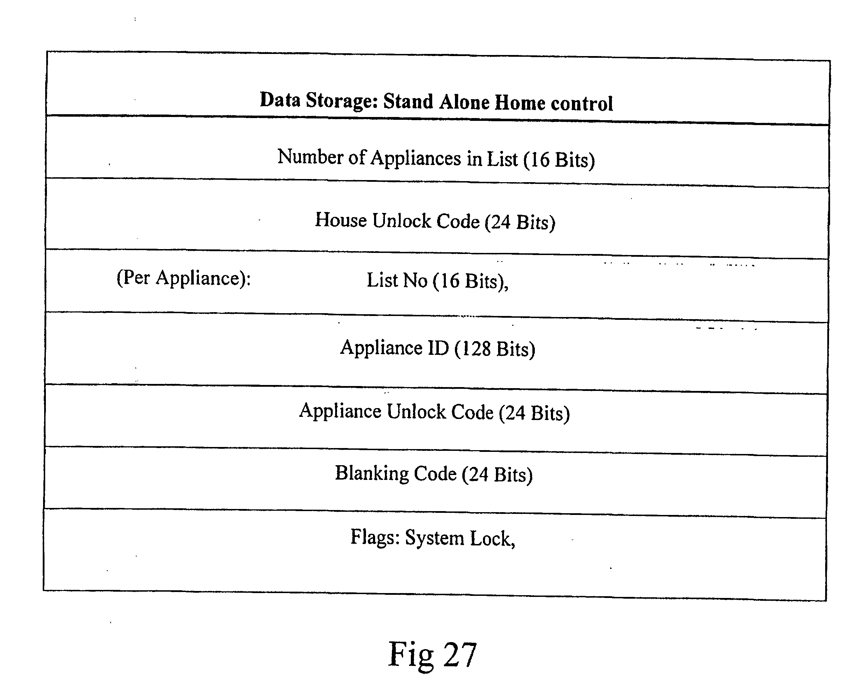

Once the unlock code has been broadcast then the processor of the security unit 72 enters its main state 700 (Figure 23) awaiting an unlock request from secure apparatus. Thus turning to Figure 23, on receipt of an unlock request at 701, the system checks at 702 to determine whether the item transmitting the request has an entry in the data store shown in Figure 27. If there is no entry for the requesting equipment, as indicated at 702, then at 706 unlock and blanking codes are created using, for example, a random number generation program and these unlock codes and blanking codes are stored at 708 in the equipment list of Figure 27 and the number of appliances in the list is updated. At 709 a system lock enable message is transmitted to the security aware appliance and a system lock enable timer is set at 710. The system then awaits a system lock confirm as indicated at 770 of Figure 24 and, assuming system lock enabled message is received from the security aware appliance 5 at step 774 returns to the main state of Figure 23.

Should the system lock enable timer expire, as indicated at 771, then the system lock enable message is again transmitted at 772 and the system lock enable timer reloaded at 773, the control unit looping back to await system lock confirm.

In the absence of a system lock confirm being received within a predetermined (heartbeat) time period may result in the apparatus being deleted from the equipment list or marked as unresponsive in the equipment list so that the processor of the home control unit 2 can return to its main state to monitor for other equipments.

Returning now to Figure 23 and in particular step 702 where the requesting equipment appears to be in the list a check is carried out to determine whether the memory key 75 has been inserted and has transmitted an unlock request with a memory key identity. If the memory key has been inserted then the list (data store Figure 27) of the security unit 72 is dumped using the same transmission method as is used to the security aware appliances. The memory key may either be stored in a safe place by the occupier of the premises 3 or may be used to dump the list to an operations centre either by direct transfer or by telephonic transfer.

Assuming that the memory key 75 has not been inserted, a check is now carried out to determine whether the unlock request has occurred while the blanking key 74 is also connected to the system. If the blanking key is not present then the unlock code for the particular appliance is located at 704 and an unlock response is transmitted at 705 prior to the unit returning to the main state 700.

If an appliance is disconnected and reconnected and the blanking key is inserted either directly to the security unit or by way of the mains electricity supply, then an equipment code covering timer is loaded at 711 and a blanking instruction including the blanking code is transmitted at 712. A timer is started at 713 and the system now waits for the blank response to come from the security aware appliance 5 at step 720. Referring then to Figure 25 briefly, if the blank covering timer expires without response from the security aware appliance 5 then the processor of the security unit 72 will return to its main state without taking further action. If however the blank response is received, as indicated at step 722, then the particular appliance is removed from the list and the number of appliances in the list updated accordingly.

The backup unit 73 may function in the same way as the memory key 75 in that the security unit may periodically do a list dump to the backup unit so that the data storage in each of the units is comparable. The blanking key 74 may include coding so that only a blanking key relating to the particular security unit 72 can ever be used with the particular security unit to blank security aware appliances 5.

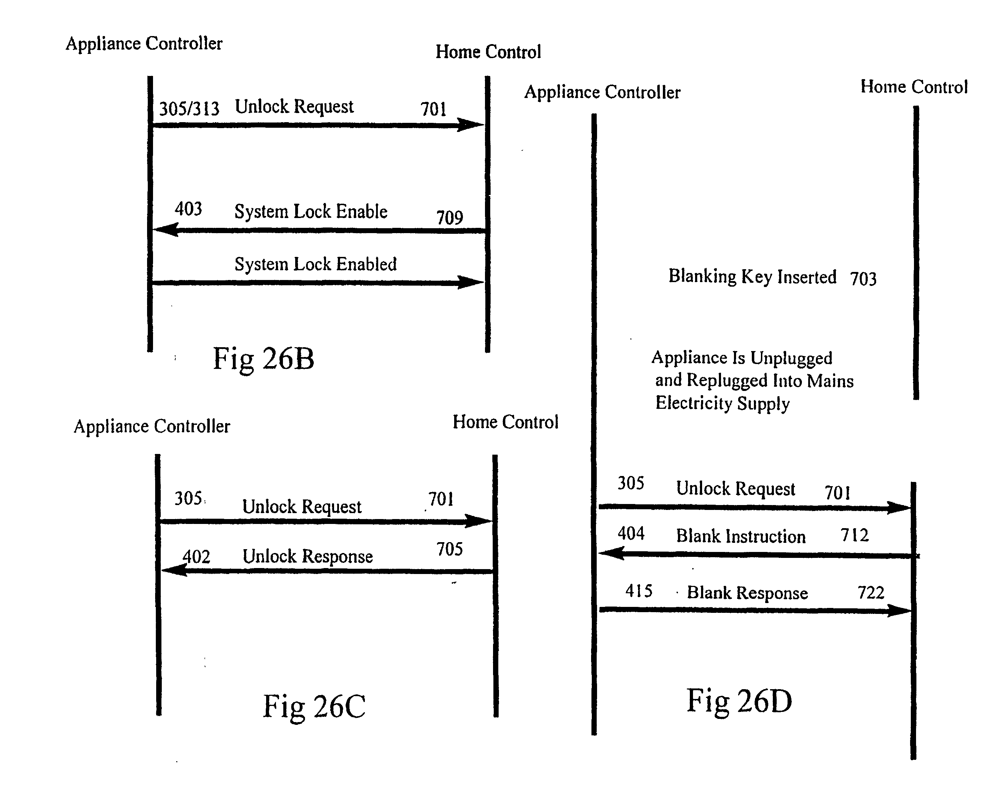

Thus considering the signalling interchanges between the home control and appliances reference is made to Figure 26, the first being Figure 26A where on connection of mains power (Figure 22 610) a broadcast unlock code is transmitted for receipt by the appliance controller so that if a complete domestic mains failure has occurred then this will be received as indicated in Figure 8, 308, in exactly the same manner as for other home control units using the remote operations centre.

Turning again to Figure 23 and also to Figure 8, when an unlock request is transmitted by a security aware appliance 5 as indicated at 305, then as shown in Figure 26B if the apparatus is not currently in the equipment list then a system lock enable message will be created at 709 for reception as indicated at 403 of Figure 8A.

This will result in a system lock enable message being returned at 411 to enable the home control unit 72 to add the apparatus tot he list.

If as indicated at 702 the equipment is present in the data store, then an unlock response 705 is returned as shown in Figure 26C.

Now as shown in Figure 26D, in the case where at 703 a blanking key is present, then on receipt of the unlock request a blank instruction will be sent to the particular appliances once it is plugged back in or has mains reconnected thereto. As indicated in Figure 8A the unlock and blanking codes fields are reset and a system lock disabled (blank response) is transmitted at 415.

It is here noted that the security unit 72 may communicate with security aware appliances in any of the appropriate manners previously determined including but not limited to FSK signalling across a mains electricity supply, low powered radio signalling or DECT signalling. Intranet communication may also be used.

## Claims

1. A security system comprising a remote operations centre, at least one home control unit and at least one security aware apparatus associated with the or each home control unit, the remote operations centre including a data store which stores, in respect of the or each security aware apparatus, respective codes generated in response to a request for coding transmitted by security aware apparatus through the associated home control unit, the remote operations centre transmitting data to the home control unit on request to permit the home control unit to transmit the respective release code to requesting security aware apparatus, the home control unit communicating with the remote operations centre through a cellular radio system, the cellular radio system determining by triangulation the approximate location of the home control unit and transmitting data defining the location to the remote operations centre, the remote operations centre determining respective codes to be transmitted in dependence upon the determined location of the home control unit.

2. A security system as claimed in claim 1, in which the home control unit or each home control unit includes a data store in which release codes for the or each of the respective associated security aware apparatus are stored, on first connection of a security aware apparatus to the system, the home control unit responding to signals requesting a code transmitted therefrom by communicating a respective identity code received from the transmitting apparatus to the remote operations centre, the remote operations centre returning at least one respective code for retransmission to the requested apparatus.

3. A security system as claimed in claim 2, in which the data store is volatile whereby on disconnection of mains electrical power from the home control unit all stored codes are lost, the home control unit, on reconnection of power, communicating with the remote operations centre for downloading of all data whereby if the home control unit is moved to a different location identified by the GSM triangulation the remote operations centre downloads different release codes or downloads no codes.

4. A security system as claimed in any preceding claim in which the home control unit transmits a unit identity code unique to the home control unit whereby home control units removes to an unauthorised location may be traced.

5. A security system as claimed in any preceding claim, in which the home control unit includes receiving means to receive signals from security aware apparatus, the receiving means being connected to a mains electrical power line and arranged to detect signals defining data messages superimposed thereon.

6. A security system as claimed in any one of claims 1 to 4, in which the home control unit includes receiving means responsive to low power radio communication.

7. A security system as claimed 6, in which the low power radio communication uses DECT standards and protocols.

8. A security system as claimed in any one of claims 1 to 4, in which the home control unit includes receiving means responsive to electronic messages transmitted by internet or intranet facilities.

9. A security system as claimed in any one of claims 1 to 7, including a transmitting means for returning released codes to security aware apparatus, the transmitting means comprising means to superimpose signalling on a mains electrical power lone.

10. A security system as claimed in any one of claims 1 to 7 in which transmitting means are provided to return release codes to security aware apparatus, the transmitting means using low power radio communication.

11. A security system as claimed in claim 10, in which the radio communication uses DECT standards and protocols.

12. A security system as claimed in any one of claims 1 to 7, including a transmitting means for returning release codes to security aware apparatus, the transmitting means using connectionless communication to forward data messages to security aware apparatus.

13. A home control unit in combination with a security system as claimed in any preceding claim.

14. A security aware appliance in combination with a security system as claimed in any one of claims 1 to 12.

15. Remote operations centre in combination with a security system as claimed in any one of claims 1 to 12.

## Patentansprüche

1. Sicherheitssystem mit
einem Fernbetriebszentrum,
zumindest einer lokalen Steuereinheit und
zumindest einer mit der lokalen Steuereinheit oder den lokalen Steuereinheiten verbundenen zu sichernder Einrichtung, wobei
das Fernbetriebszentrum einen Datenspeicher umfasst, der bezüglich der zu sichernden Einrichtung oder der zu sichernden Einrichtungen jeweilige Codes speichert, die als Antwort auf eine Codierungsanforderung von der zu sichernden Einrichtung über die zugehörige lokale Steuereinheit übertragen werden,
das Fernbetriebszentrum auf Anforderung Daten an die lokale Steuereinheit überträgt, um der lokalen Steuereinheit zu ermöglichen, den jeweiligen Freigabecode an die anfordernde, zu sichernde Einrichtung zu übertragen,
die lokale Steuereinheit mit dem Fernbetriebszentrum über ein Mobilfunksystem kommuniziert,
das Mobilfunksystem mittels Triangulation den ungefähren Standort der lokalen Steuereinheit ermittelt und Daten überträgt, die den Standort dem Fernbetriebszentrum angeben, und
das Fernbetriebszentrum jeweilige zu übertragende Codes ermittelt, die abhängig von dem ermittelten Standort der lokalen Steuereinheit sind.

2. Sicherheitssystem gemäß Anspruch 1, wobei die lokale Steuereinheit oder die lokalen Steuereinheiten einen Datenspeicher umfasst/ umfassen, in dem Freigabecodes für die entsprechende zugehörige zu sichernde Einrichtung oder die entsprechenden zugehörigen zu sichernden Einrichtungen gespeichert sind, wobei bei der ersten Verbindung einer zu sichernden Einrichtung mit dem System die lokale Steuereinheit auf Signale antwortet, die einen Code anfordern, der von ihr übertragen wird, indem sie einen entsprechenden, von der übertragenden Einrichtung empfangenen Identifizierungscode an das Fernbetriebszentrum überträgt, und das Fernbetriebszentrum zumindest einen entsprechenden Code zur weiteren Übertragung an die anfordernde Einrichtung zurückgibt.

3. Sicherheitssystem gemäß Anspruch 2, wobei
der Datenspeicher flüchtig ist, wodurch bei Trennung des Stromversorgungsnetzes von der lokalen Steuereinheit alle gespeicherten Codes verloren sind, und
die lokale Steuereinheit bei Wiederanschluss des Stroms mit dem Fernbetriebszentrum zum Herunterladen aller Daten kommuniziert, wodurch das Fernbetriebszentrum, wenn die lokale Steuereinheit an einen anderen, von der GSM-Triangulation identifizierten Standort gebracht wird, andere Freigabecodes herunterlädt oder keine Codes herunterlädt.

4. Sicherheitssystem gemäß einem der vorhergehenden Ansprüche, wobei die lokale Steuereinheit einen für die lokale Steuereinheit eindeutigen Identifizierungscode der Einheit überträgt, wodurch an einen nicht autorisierten Standort verbrachte lokale Steuereinheiten verfolgt werden können.

5. Sicherheitssystem gemäß einem der vorhergehenden Ansprüche, wobei die lokale Steuereinheit Empfangsmittel umfasst, die Signale der zu sichernden Einrichtung empfangen, wobei die Empfangsmittel an eine Stromversorgungsleitung angeschlossen und derart ausgebildet sind, dass sie Signale erfassen, die Datennachrichten angeben und darauf überlagert sind.

6. Sicherheitssystem gemäß einem der Ansprüche 1 bis 4, wobei die lokale Steuereinheit Empfangsmittel umfasst, die auf eine Funkübertragung mit niedriger Leistung ansprechen.

7. Sicherheitssystem gemäß Anspruch 6, wobei die Funkübertragung mit niedriger Leistung DECT-Standards und -Protokolle benutzt.

8. Sicherheitssystem gemäß einem der Ansprüche 1 bis 4, wobei die lokale Steuereinheit Empfangsmittel umfasst, die auf von Internetoder Intranet-Einrichtungen übertragene elektronische Nachrichten ansprechen.

9. Sicherheitssystem gemäß einem der Ansprüche 1 bis 7, das Sendemittel umfasst, die Freigabecodes an die zu sichernde Einrichtung zurücksenden, wobei die Sendemittel Mittel aufweisen, um Signalisierung auf Stromversorgungsleitungen zu überlagern.

10. Sicherheitssystem gemäß einem der Ansprüche 1 bis 7, wobei Sendemittel vorgesehen sind, die Freigabecodes an die zu sichernde Einrichtung zurücksenden, und die Sendemittel eine Funkverbindung mit niedriger Leistung benutzen.

11. Sicherheitssystem gemäß Anspruch 10, wobei die Funkverbindung DECT-Standards und -Protokolle benutzt.

12. Sicherheitssystem gemäß einem der Ansprüche 1 bis 7, das Sendemittel umfasst, die Freigabecodes an die zu sichernde Einrichtung zurücksenden, wobei die Sendemittel eine verbindungslose Übertragung zur Weiterleitung von Nachrichten an die zu sichernde Einrichtung benutzen.

13. Lokale Steuereinheit in Kombination mit einem Sicherheitssystem gemäß einem der vorhergehenden Ansprüche.

14. Zu sicherndes Gerät in Kombination mit einem Sicherheitssystem gemäß einem der Ansprüche 1 bis 12.

15. Fernbetriebszentrum in Kombination mit einem Sicherheitssystem gemäß einem der Ansprüche 1 bis 12.

## Revendications

1. Système de sécurité comprenant un centre de télé-opérations, au moins une unité de commande domestique et au moins un appareil concernant la sécurité associé avec la ou chaque unité de commande domestique, le centre de télé-opérations comprenant une mémoire de données qui stocke, relativement à l'appareil ou chaque appareil concernant la sécurité, des codes respectifs engendrés en réponse à une requête de codage transmise par l'appareil concernant la sécurité à travers l'unité de commande domestique associée, le centre de télé-opérations émettant des données vers l'unité de commande domestique sur requête pour permettre à l'unité de commande domestique de transmettre le code fourni respectif à l'appareil concernant la sécurité, l'unité de commande domestique communiquant avec le centre de télé-opérations à travers un système radio cellulaire, le système radio cellulaire déterminant par triangulation la position approximative de l'unité de commande domestique et transmettant des données définissant la position au centre de télé-opérations, le centre de télé-opérations déterminant des codes respectifs à transmettre en fonction de la position déterminée de l'unité de commande domestique.

2. Système de sécurité selon la revendication 1, dans lequel l'unité de commande domestique ou chaque unité de commande domestique comprend une mémoire de données dans laquelle sont stockés des codes à fournir pour le ou chaque appareil associé respectif concernant la sécurité, lors de la première connexion au système d'un appareil concernant la sécurité, l'unité de commande domestique étant sensible à des signaux requérant un code transmis depuis celui-ci en communiquant, au centre de télé-opérations, un code d'identité respectif reçu depuis l'appareil émetteur, le centre de télé-opérations renvoyant au moins un code respectif pour retransmission à l'appareil requis.

3. Système de sécurité selon la revendication 2, dans lequel la mémoire de données est volatile si bien que, en cas de déconnexion de l'alimentation secteur de l'unité de commande domestique, tous les codes stockés sont perdus, l'unité de commande domestique, lors de la reconnexion au secteur, communiquant avec le centre de télé-opérations pour délivrer un chargement toutes les données si bien que, si l'unité de commande domestique est déplacée jusqu'à un endroit différent identifié par la triangulation GSM, le centre de télé-opérations délivre un chargement de codes à fournir différents ou ne délivre aucun code.

4. Système de sécurité selon l'une quelconque des revendications précédentes, dans lequel l'unité de commande domestique émet un code d'identité de l'unité pour l'unité de commande domestique, si bien qu'on peut suivre des déplacements d'unités de commande domestiques à un endroit non autorisé.

5. Système de sécurité selon l'une quelconque des revendications précédentes, dans lequel l'unité de commande domestique comprend des moyens de réception de signaux provenant de l'appareil concernant la sécurité, les moyens de réception étant reliés à une ligne d'alimentation électrique du secteur et agencés pour détecter des signaux définissant des messages de données qui y sont superposés..

6. Système de sécurité selon l'une quelconque des revendications 1 à 4, dans lequel l'unité de commande domestique comprend des moyens de réception sensibles à des communications radio à faible puissance.

7. Système de sécurité selon la revendication 6, dans lequel la communication radio à faible puissance utilise des normes et protocoles DECT.

8. Système de sécurité selon l'une quelconque des revendications 1 à 4, dans lequel l'unité de commande domestique comprend des moyens de réception sensibles à des messages électroniques transmis à travers des installations Internet ou Intranet.

9. Système de sécurité selon l'une quelconque des revendications 1 à 7, comprenant des moyens d'émission pour renvoyer, à l'appareil concernant la sécurité, des codes fournis, les moyens d'émission comprenant des moyens pour superposer de la signalisation sur une ligné d'alimentation électrique du secteur.

10. Système de sécurité selon l'une quelconque des revendications 1 à 7, dans lequel des moyens d'émission sont prévus pour renvoyer, à l'appareil concernant la sécurité, des codes fournis, les moyens d'émission utilisant des communications radio à faible puissance.

11. Système de sécurité selon la revendication 10, dans lequel les communications radio utilisent des normes et protocoles DECT.

12. Système de sécurité selon l'une quelconque des revendications 1 à 7, comprenant des moyens d'émission pour renvoyer, à l'appareil concernant la sécurité, des codes fournis, les moyens d'émission utilisant des communications sans connexion pour transmettre des messages de données à l'appareil concernant la sécurité.

13. Unité de commande domestique en combinaison avec un système de sécurité tel que revendiqué dans l'une quelconque des revendications précédentes.

14. Dispositif concernant la sécurité en combinaison avec un système de sécurité tel que revendiqué dans l'une quelconque des revendications 1 à 12.

15. Centre de télé-opérations en combinaison avec un système de sécurité tel que revendiqué dans l'une quelconque des revendications 1 à 12.
